(19)

Europäisches
Patentamt

European
Patent Office

Office européen
des brevets

(11) **EP 4 272 579 A1**

(12) **EUROPEAN PATENT APPLICATION**
published in accordance with Art. 153(4) EPC

(43) Date of publication:
**08.11.2023 Bulletin 2023/45**

(21) Application number: **21914520.8**

(22) Date of filing: **29.12.2021**

(51) International Patent Classification (IPC):
**A23L 33/15** (2016.01)

(52) Cooperative Patent Classification (CPC):
**A23L 33/15**

(86) International application number:
**PCT/CN2021/142550**

(87) International publication number:
**WO 2022/143788 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2020 CN 202011597635**
**29.12.2020 CN 202011599006**

(71) Applicant: **Wilmar (shanghai) Biotechnology Research & Development Center Co., Ltd.**
**Shanghai 200137 (CN)**

(72) Inventors:
- **XU, Xuebing**
  **Shanghai 200137 (CN)**
- **GUO, Ruihua**
  **Shanghai 200137 (CN)**
- **GE, Hui**
  **Shanghai 200137 (CN)**
- **ZHANG, Hong**
  **Shanghai 200137 (CN)**
- **LI, Sheng**
  **Shanghai 200137 (CN)**

(74) Representative: **Santoro, Sofia et al**
**Società Italiana Brevetti S.p.A.**
**Via Giosuè Carducci, 8**
**20123 Milano (IT)**

(54) **COMPOSITION FOR IMPROVING DIGESTION OF LIPID CONTAINED IN FOOD, AND USE THEREOF**

(57) A grease composition for infant formula milk, an additive composition, a structured emulsion, a water/oil (W/O-type) composition, a food composition, and the use thereof. The composition contains grease, vegetable phospholipid, animal phospholipid and an emulsifier. The composition can be used for infant formula milk powder or food for improving lipid digestion.

EP 4 272 579 A1

## Description

### Technical Field

The present invention relates to a composition for improving digestion of lipid contained in food, and use thereof.

### Background Art

Breast milk is an important food for infants. It contains comprehensive nutrients needed for infant growth and development, such as proteins, fats, carbohydrates, minerals, vitamins, *etc.* with a moderate content and proportion, and is the most ideal natural food for infants.

Studies have shown that the particle size and lipid composition of milk fat globules can significantly affect lipolysis and nutrient metabolism (Michalski, M. C., Briard, V, Michel, F., et al. Journal of Dairy Science, 2005, 88, 1927-1940; Gallier, S., Vocking, K., Post, J. A., et al. Colloids Surf B Biointerfaces, 2015, 136, 329-39). The milk fat globules of naturally occurring human breast milk have the following structure: triglycerides are wrapped by a 5-20 nm-thick phospholipid trimolecular membrane, and the phospholipid membrane is composed of phospholipids, glycoproteins, glycolipids and cholesterol; the particle size range of milk fat globules is 0.1-12 microns, and the average particle size is 4.2 microns. This structure makes it easier for the lipase to enter the milk fat globules and bind to internal triglycerides, so breast milk would have a fast lipolysis rate and a short gastric emptying time (Lopez C, Ménard O. Colloids Surf B, 2011, 83: 29-41). However, although the fat globules of reconstituted milk of traditional infant formula milk powder have a small particle size and a large specific surface area, their periphery is covered by a dense protein membrane, and the thickness of the membrane is relatively thick, reaching 20-100 nanometers; In order for the lipase to bind to the internal triglycerides, it needs to enzymatically hydrolyze the protein membrane first, and then the lipase can enter the fat globules for hydrolysis. So, the traditional infant formula milk powder would have a relatively slow lipolysis rate and a long gastric emptying time.

In order to improve the lipolysis rate in infant formula milk, Nutricia uses a milk fat globule membrane protein or a butter powder-derived phospholipid as an emulsifier, and adopts low-speed shearing and low-pressure homogenization to prepare large-particle milk fat globules with a particle size of 2-6 microns (WO 2016/163883 A2 and US 2018/0092376 A1). The fat in the fat globule is wrapped by a phospholipid monomolecular membrane containing phospholipids, proteins and cholesterol, which has the functions of promoting postprandial lipid absorption of infants, promoting gastric emptying of infants, and weight control. Mead Johnson discloses a nutritional composition containing structured fat globules with a specific particle size and fatty acid composition, and use thereof. The structured fat globules are fat globules with a particle size of 2-13 $\mu$m, which are composed of phospholipids, cholesterol, membrane proteins, and greases containing a certain amount of trans-fatty acids, branched fatty acids and conjugated linoleic acids, and can promote lipid digestion and gastrointestinal motility (US 20170231262 A1).

According to the patents of Nutricia and Mead Johnson, components such as milk fat globule membrane proteins, phospholipids or cholesterol need to be specially added during emulsion preparation in addition to lipids so as to promote lipid digestion. In order to simplify the operation, the present invention simulates the lipid composition of breast milk, and prepares a water/oil (W/O-type) composition through lipid construction, which can be directly used for the preparation of formula milk. When preparing the emulsion, there is no need to add milk fat globule membrane proteins and other lipid components, and the lipid digestion and absorption of infant formula milk can be significantly improved.

### Summary of the Invention

In order to simplify the operation, the present invention simulates the lipid composition of breast milk and prepares a grease composition through lipid construction. Through process adjustment, bubbles are eliminated, the appearance state of the grease composition is improved, the system is stable, the surface is smooth and delicate. The system is an anhydrous system, so it is convenient for subsequent storage and transportation. The grease composition can be directly used in the preparation of formula milk, without adding milk fat globule membrane proteins and other lipid components when preparing the emulsion, and can significantly improve the lipid digestion and absorption of infant formula milk.

The present invention is intended to provide a grease composition with good stability and low oil separation rate, and the formula milk prepared with the grease composition has the advantages of high lipid digestion rate, good emulsion stability and the like.

A first aspect of the present invention provides a grease composition, which comprises a grease, a vegetable phospholipid, an animal phospholipid and an emulsifier.

In one or more embodiments, the fatty acids in the grease in the grease composition is characterized by: the content of saturated fatty acids (SAFAs) is ≤ 45 wt%, the content of monounsaturated fatty acids (MUFAs) is ≤ 50 wt%, such as ≤ 35 wt%, the content of polyunsaturated fatty acids (PUFAs) is ≤ 35 wt%, such as ≤ 30 wt%.

In one or more embodiments, the fatty acids in the grease in the grease composition comprises oleic acids, palmitic acids and linoleic acids, preferably, the mass ratio of oleic acids, palmitic acids and linoleic acids is (1.5-2.5):1:(0.7-1.2).

In one or more embodiments, in terms of fatty acids in the grease, the content of palmitic acids is 18-25 wt% on the basis of the total weight of the fatty acids.

In one or more embodiments, in terms of fatty acids in the grease, the content of oleic acids is 25-45 wt% on the basis of the total weight of the fatty acids.

In one or more embodiments, in terms of fatty acids in the grease, the content of the linoleic acids is 10-25 wt% on the basis of the total weight of the fatty acids.

In one or more embodiments, the grease comprises one or more of a vegetable-derived modified or non-modified grease, an animal-derived modified or non-modified grease and a microbial-derived modified or non-modified grease.

In one or more embodiments, the vegetable-derived grease is selected from one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the animal-derived grease is selected from one or more of a bovine milk-derived grease, a goat milk-derived grease, a buffalo milk-derived grease, a camel milk-derived grease and an aquatic animal-derived grease.

In one or more embodiments, the microbial-derived grease comprises one or more of an algae oil and a fungal oil.

In one or more embodiments, the grease comprises a structured lipid, preferably an OPO structured lipid.

In one or more embodiments, the grease comprised in the grease composition comprises or consists of a rice oil, an OPO structured fat, a soybean oil, a coconut oil and an algae oil.

In one or more embodiments, on the basis of the total mass the grease, the content of the rice oil is 18-23 wt%, preferably 21 ± 1 wt%, the content of the OPO structured fat is 27-31 wt%, preferably 29 ± 1 wt%, the content of the soybean oil is 27-31 wt%, preferably 29 ± 1 wt%, the content of the coconut oil is 17-21 wt%, preferably 19 ± 1 wt%, the content of the algae oil is 0.5-2 wt%, preferably 1 ± 0.5 wt%.

In one or more embodiments, on the basis of the total weight of the grease composition, the content of the grease is 70-95%, such as 70-85% or 80-95%.

In one or more embodiments, the vegetable phospholipid is derived from a vegetable phospholipid product selecting from one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product.

In one or more embodiments, the animal phospholipid is derived from a terrestrial animal-derived animal phospholipid product, such as a bovine milk-derived phospholipid product and an egg-derived phospholipid product, and an aquatic animal-derived phospholipid product, such as a fish-, shrimp-, and shellfish-derived phospholipid product.

In one or more embodiments, the vegetable phospholipid product is a sunflower phospholipid product and/or a soybean phospholipid product, and the animal phospholipid product is a bovine milk-derived phospholipid product.

In one or more embodiments, on the basis of the total weight of the grease composition, the content of the vegetable phospholipid is 0.1-1%, preferably 0.1-0.5%.

In one or more embodiments, on the basis of the total weight of the grease composition, the content of the vegetable phospholipid product is 0.1-1.5%, preferably 0.15-1.2% or 0.1-0.9%.

In one or more embodiments, the animal-derived phospholipid product is a milk extract.

In one or more embodiments, the animal phospholipid product is derived from one or more of a cheese powder, an MFGM (milk fat globule membrane) and a concentrated bovine milk phospholipid powder.

In one or more embodiments, on the basis of the total weight of the grease composition, the content of the animal-derived phospholipid in the grease composition is 0.2-1.0%, preferably 0.2-0.8%.

In one or more embodiments, the grease composition comprises a milk extract, and the content of the milk extract is 1-12 wt%, preferably 3-12 wt% on the basis of the total weight of the grease composition.

In one or more embodiments, on the basis of the total weight of the grease composition, the content of the emulsifier in the grease composition is 0.1-7%, such as 1-7%, 0.1-5% or 0.3-4%; Preferably, the emulsifier is a monoglyceride.

In one or more embodiments, the grease composition comprises 70-95 wt% of the grease, 0.1-1 wt% of the vegetable phospholipid, 0.2-0.8% of the animal phospholipid and 1-7 wt% of the monoglyceride, wherein the grease comprises 18-23 wt% of the rice oil, 25-30 wt% of the OPO structured lipid, 25-30 wt% of the soybean oil, 15-20 wt% of the coconut oil and 0.5-2 wt% of the algae oil.

In one or more embodiments, the grease composition comprises 70-95 wt% of the grease, 0.1-1.5 wt% of the vegetable phospholipid product (preferably the sunflower phospholipid product and/or the soybean phospholipid product), 1-12 wt% of the bovine milk extract and 1-7 wt% of the monoglyceride, wherein the grease comprises 18-23 wt% of the rice oil, 27-31 wt% of the OPO structured fat, 27-31 wt% of the soybean oil, 17-21 wt% of the coconut oil and 0.5-2 wt% of the algae oil.

In one or more embodiments, on the basis of the total weight of the grease, in the grease, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

A second aspect of the present invention provides an additive composition comprising a vegetable phospholipid, an animal phospholipid and an emulsifier or consisting of a vegetable phospholipid product, an animal phospholipid product and an emulsifier.

In one or more embodiments, on the basis of the total weight of the additive composition, the content of the vegetable phospholipid is 0.5-20 wt%, preferably 3-17 wt%, the content of the animal phospholipid is 2-15 wt%, preferably 3-12 wt%, and the content of the emulsifier is 10-48 wt%, preferably 15-45 wt%.

In one or more embodiments, the vegetable phospholipid is derived from a vegetable-derived phospholipid product selecting from one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product.

In one or more embodiments, the animal phospholipid is derived from an animal-derived phospholipid product, and the animal-derived phospholipid product is an animal-derived phospholipid product selected from a terrestrial animal-derived phospholipid product, such as a bovine milk-derived phospholipid product and an egg-derived phospholipid product, and an aquatic animal-derived phospholipid product, such as a fish-, shrimp-, and shellfish-derived phospholipid product.

In one or more embodiments, the vegetable phospholipid product is a sunflower phospholipid product and/or a soybean phospholipid product, and the animal-derived phospholipid product is a bovine milk-derived phospholipid product.

In one or more embodiments, the animal phospholipid product is a milk extract.

In one or more embodiments, the animal phospholipid product is one or more of a cheese powder, an MFGM and a concentrated bovine milk phospholipid powder.

In one or more embodiments, the additive composition comprises or consists of 0.5-20 wt%, preferably 3-17 wt% of the vegetable phospholipid, 50-70 wt% of the bovine milk extract, and 10-48 wt%, preferably 15-45 wt% of the emulsifier.

In one or more embodiments, the emulsifier is a monoglyceride.

In one or more embodiments, the additive composition is used in the grease for preparing the structured emulsion to increase the lipid digestion rate of the structured emulsion containing the grease and improve the emulsion stability of the structured emulsion.

A third aspect of the present invention provides a structured emulsion, which comprises the grease composition described in any embodiment herein, a water-soluble ingredient and water, or comprises the grease described in any embodiment herein, the additive composition described in any embodiment herein, a water-soluble ingredient and water.

In one or more embodiments, the water-soluble ingredient comprises a protein, a carbohydrate, a complex microbial mineral and a stabilizer.

In one or more embodiments, the protein comprises a bovine milk- or goat milk-derived whey protein, casein, a legume-derived protein, and a grain protein, and a partially or fully hydrolyzed protein from a bovine milk- or goat milk-derived whey protein, casein, or a legume-derived protein.

In one or more embodiments, the legume-derived protein is a soybean protein and/or a pea protein.

In one or more embodiments, the grain protein comprises one or more of a rice protein, a rice bran protein, a wheat protein, a rye protein, a sorghum protein, a corn protein, and an oat protein.

In one or more embodiments, the content of the protein is 12-18 wt% on the basis of the total weight of the water-soluble ingredient.

In one or more embodiments, the protein in the water-soluble ingredient is provided by a skim milk powder and a whey protein powder.

In one or more embodiments, on the basis of the total weight of the water-soluble ingredient, the content of the skimmed milk powder is 15-25 wt%, preferably 18-23 wt%, and the content of the whey protein powder is 5-13 wt%, preferably 7-11 wt%.

In one or more embodiments, the carbohydrate comprises a digestible carbohydrate and an indigestible carbohydrate.

In one or more embodiments, the digestible carbohydrate comprises at least one of a lactose, a glucose, a galactose, a maltose, a sucrose, a fructose, a starch, a maltodextrin, a glucose syrup, and a corn syrup; the indigestible carbohydrate comprises at least one of a fructooligosaccharide, a galactooligosaccharide, a glucose oligosaccharide, a xylooligosaccharide, a mannan oligosaccharide and a cyclodextrin oligosaccharide.

In one or more embodiments, on the basis of the total weight of the water-soluble ingredient, the total content of the digestible carbohydrate is 60-75 wt%, and the total content of the indigestible carbohydrate is ≤ 10 wt%.

In one or more embodiments, the multivitamin mineral refers to a composition comprising one or more vitamins and/or one or more minerals.

In one or more embodiments, the vitamin comprises one or more of vitamin A, vitamin D, vitamin E, vitamin K1, vitamin B1, vitamin B2, vitamin B6, vitamin B12, niacin, folic acid, pantothenic acid, vitamin C and biotin.

In one or more embodiments, the mineral comprises but are not limited to at least one of sodium, potassium, copper, magnesium, iron, zinc, manganese, calcium, phosphorus, iodine, chlorine and selenium, optionally comprises choline and/or inositol.

In one or more embodiments, on the basis of the total weight of the water-soluble ingredient, the content of the complex microbial mineral is greater than or equal to 1.5 wt%, preferably 2-6 wt%.

In one or more embodiments, the stabilizer comprises one or more of a carrageenan, a locust bean gum, a gellan gum, a xanthan gum, a gelatin, an acacia gum, and a soybean polysaccharide.

In one or more embodiments, on the basis of the total weight of the water-soluble ingredient, the content of the stabilizer is 0.1-1 wt%.

In one or more embodiments, on the basis of the total mass of the water-soluble component, the water-soluble component comprises 12-18 wt% of the protein, 60-75 wt% of the digestible carbohydrate, 2-6 wt% of the multivitamin mineral, 0.1-1 wt% of the stabilizer and ≤ 10 wt% of the indigestible oligosaccharide.

In one or more embodiments, on the basis of the total mass of the water-soluble component, the water-soluble component comprises: 15-25 wt%, preferably 18-23 wt% of the skimmed milk powder, 5-13 wt%, preferably 7-11 wt% of the whey protein powder, 60-70 wt% of the digestible carbohydrate, 2-6 wt% of the multivitamin mineral and 0.1-1 wt% of the stabilizer.

In one or more embodiments, on the basis of the total mass of the structured emulsion, the content of the grease composition in the structured emulsion is 3-10 wt%, preferably 3.7-4.4 wt%.

In one or more embodiments, on the basis of the total mass of the structured emulsion, the content of the grease in the structured emulsion may be 2.5-5 wt%, preferably 3-4 wt%.

In one or more embodiments, on the basis of the total mass of the structured emulsion, the content of the additive composition in the structured emulsion is 0.1-0.8 wt%.

In one or more embodiments, on the basis of the total mass of the structured emulsion, the content of the water-soluble component in the structured emulsion is 7-17 wt%, preferably 8-11 wt%.

In one or more embodiments, on the basis of the total mass of the structured emulsion, the structured emulsion comprises 3-10 wt% of the grease composition described in any embodiment herein, 7-17 wt% of the water-soluble component described herein and 73 wt%-90 wt% of water. Preferably, the structured emulsion comprises 3.7-4.4 wt% of the grease composition described herein, 8-11 wt% of the water-soluble component described herein and the balance of water.

In one or more embodiments, on the basis of the total mass of the structured emulsion, the structured emulsion comprises 2.5-5 wt% of the grease described in any embodiment herein, 0.1-0.8 wt% of the additive composition described in any embodiment herein, 7-17 wt% of the water-soluble component described in any embodiment herein and the balance of water.

In one or more embodiments, on the basis of the total mass of the structured emulsion, the structured emulsion comprises 1.5-3 wt% of the skimmed milk powder, 0.5-1.2 wt% of the whey protein powder, 5-7 wt% of the digestible carbohydrate, 0.3-0.5 wt% of the multivitamin mineral, 0.03-0.08 wt% of the stabilizer, 3-5 wt% of the grease composition described in any embodiment herein, and the balance of water.

A fourth aspect of the present invention provides the a method for preparing the grease composition described in any embodiment of the first aspect of the present invention, and the method comprises: mixing a vegetable phospholipid product, an animal phospholipid product, an emulsifier and part of the grease used to prepare the grease composition, heating and stirring the obtained mixture at 70-90°C for 20-40 min at a stirring speed of > 200 rpm, cooling same to room temperature, then adding the remaining greases, heating same to 55-65°C, stirring same further for 10-30 min at a stirring speed of > 200 rpm, then lowering the temperature to 28-33°C, adjusting the stirring speed to 40-60 rpm, stirring same further for 3-8 min, and then rapidly cooling and kneading same for 15-30 min. Preferably, the part of the grease accounts for 10-20 wt% of the total amount of the grease used.

A fifth aspect of the present invention provides a method for preparing the structured emulsion of the present invention, and the method comprises:

(1) providing the grease composition described in any embodiment of the first aspect of the present invention;

(2) mixing a water-soluble ingredient with water to obtain a water phase composition;

(3) mixing and emulsifying the grease composition and the water phase composition to obtain the emulsion; and optionally

(4) sterilizing the emulsion obtained in step (3).

In one or more embodiments, the above step (1) adopts the method described in the fourth aspect of the present invention to provide the grease composition.

In one or more embodiments, in the above step (2), the water-soluble component and water are mixed and stirred below 35°C to form the water phase.

In one or more embodiments, the emulsification is selected from one or more of a shear emulsification, a colloid mill emulsification, a ball mill emulsification, a ultrasonic emulsification, a membrane emulsification, a microwave emulsification, a sonic emulsification or a self-emulsification.

In one or more embodiments, the shear emulsification is used, and the shear rate is 3000-20000 rpm and the shear time is 1-15 min.

In one or more embodiments, homogenization is performed after emulsification; preferably, the homogenization has a pressure of 10-500 bar, and performed for more than 3 cycles.

In one or more embodiments, in the above step (3), the grease composition and the water phase composition are mixed at 33-38°C and stirred for less than 20 min, and then sheared and homogenized; preferably, the shear rate is $\leq$ 4000 rpm, and the shear time is 1-5 min; the homogenization has a pressure of $\leq$ 20 bars, and can be performed 1-5 times, preferably 3-5 times.

A sixth aspect of the present invention comprises the structured emulsion prepared by the method of the present invention.

A seventh aspect of the present invention provides a method for preparing a composition for use in food, and the method comprises the step of drying the structured emulsion described in the present invention.

An eighth aspect of the present invention provides a dry powder, which is the powder obtained by drying the structured emulsion described in any embodiment of the third aspect or the sixth aspect of the present invention, that is, the composition for use in food described herein.

In one or more embodiments, on the basis of the total mass of the dry powder, the dry powder comprises or consists of the following ingredients: 20-30 wt% of the grease described in any embodiment herein; 0.03-0.5 wt%, preferably 0.03-0.2 wt% of a vegetable phospholipid; 0.05-0.5%, preferably 0.07-0.35% of an animal phospholipid; 10-25 wt% of a protein; 40-55 wt% of a carbohydrate; 0.1-0.8 wt% of a stabilizer; 1-5 wt% of a multivitamin mineral; and 0.1-3.0 wt% of an emulsifier.

In one or more embodiments, the grease comprises or consists of the following ingredients: on the basis of the total mass of the grease, 18-23 wt%, preferably 121 $\pm$ 1 wt% of a rice oil, 27-31 wt%, preferably 29 $\pm$ 1 wt% of an OPO structured fat, 27-31 wt%, preferably 29 $\pm$ 1 wt% of a soybean oil, 17-21 wt%, preferably 19 $\pm$ 1 wt% of a coconut oil, and 0.5-2 wt%, preferably 1 $\pm$ 0.5 wt% of an algae oil.

In one or more embodiments, the dry powder is a milk powder, such as an infant formula milk powder.

In one or more embodiments, the dry powder comprises: 12-17 wt% of a skim milk powder, 5-8 wt% of a whey protein powder, 40-50 wt% of a carbohydrate, 2-4 wt% of a multivitamin mineral, 0.2-0.6 wt% of a stabilizer and 27-32 wt% of the grease composition of the present invention.

A ninth aspect of the present invention provides a water-reconstituted milk, which comprises the dry powder (milk powder) of the present invention and is prepared by dissolving the dry powder in water.

A tenth aspect of the present invention provides a water/oil (W/O-type) composition, the water/oil (W/O-type) composition comprises a grease, a vegetable phospholipid, an animal phospholipid, an emulsifier and water; wherein, on the basis of the total weight of the water/oil (W/O-type) composition, the content of the grease is 70-95%, preferably 70-85%, the content of the vegetable phospholipid is 0.05-1%, preferably 0.07-0.5%, and the content of the animal phospholipid is 0.2-0.8%, the content of the emulsifier is 0.1-5%, preferably 0.3-4%, the content of the water is 5-25% or the balance.

In one or more embodiments, the fatty acids of the grease are characterized by: the content of saturated fatty acids is $\leq$ 45%, the content of monounsaturated fatty acids is $\leq$ 35%, and the content of polyunsaturated fatty acids is $\leq$ 35%.

In one or more embodiments, the fatty acids of the grease comprise oleic acids, palmitic acids and linoleic acids, preferably, the mass ratio of oleic acids, palmitic acids and linoleic acids is (1.5-2.5):1:(0.7-1.2).

In one or more embodiments, on the basis of the total weight of the fatty acids, the content of palmitic acids is 18-25%; preferably, on the basis of the total weight of the fatty acids, the content of oleic acids is 25-45%; preferably, on the basis of the total weight of the fatty acids, the content of the linoleic acids is 10-25%.

In one or more embodiments, the grease comprises one or more of a vegetable-derived modified or non-modified grease, an animal-derived modified or non-modified grease and a microbial-derived modified or non-modified grease.

In one or more embodiments, the vegetable-derived grease is selected from one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter.

In one or more embodiments, the animal-derived grease is selected from one or more of a bovine milk-derived grease, a goat milk-derived grease, a buffalo milk-derived grease, a camel milk-derived grease and an aquatic animal-derived grease.

In one or more embodiments, the microbial-derived grease comprises one or more of an algae oil and a fungal oil.

In one or more embodiments, the grease comprises or consists of a rice oil, an OPO structured fat, a soybean oil, a coconut oil and an algae oil.

In one or more embodiments, on the basis of the total mass the grease, the content of the rice oil is 18-23 wt%, preferably 21 ± 1 wt%, the content of the OPO structured fat is 27-31 wt%, preferably 29 ± 1 wt%, the content of the soybean oil is 27-31 wt%, preferably 29 ± 1 wt%, the content of the coconut oil is 17-21 wt%, preferably 19 ± 1 wt%, the content of the algae oil is 0.5-2 wt%, preferably 1 ± 0.5 wt%.

In one or more embodiments, the vegetable phospholipid is derived from a vegetable phospholipid product selecting from one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product.

In one or more embodiments, the animal phospholipid is derived from a terrestrial animal-derived animal phospholipid product, such as a bovine milk-derived phospholipid product and an egg-derived phospholipid product, and an aquatic animal-derived phospholipid product, such as a fish-, shrimp-, and shellfish-derived phospholipid product.

In one or more embodiments, the vegetable phospholipid product is a sunflower phospholipid product and/or a soybean phospholipid product, and the animal phospholipid is a bovine milk-derived phospholipid product.

In one or more embodiments, the water/oil (W/O-type) composition comprises a milk extract, and the content of the vegetable phospholipid product (preferably the sunflower phospholipid product and/or the soybean phospholipid product) is 0.1-1.5%, preferably 0.1-0.9% on the basis of the total weight of the water/oil (W/O-type) composition.

In one or more embodiments, the animal phospholipid product comprises one or more of a cheese powder, an MFGM and a concentrated bovine milk phospholipid powder.

In one or more embodiments, the water/oil (W/O-type) composition comprises a bovine milk extract, and the content of the bovine milk extract is 1-12%, preferably 2-8% on the basis of the total weight of the water/oil (W/O-type) composition.

In one or more embodiments, the water/oil (W/O-type) composition comprises 70-95% of the grease, 0.1-1% of the vegetable phospholipid, 0.2-0.8% of the animal phospholipid, and 0.1-5% of the monoglyceride and 5-25% or the balance of water; wherein the grease comprises 18-23 wt% of the rice oil, 27-31 wt% of the OPO structured fat, 27-31 wt% of the soybean oil, 17-21 wt% of the coconut oil and 0.5-2 wt% of the algae oil.

In one or more embodiments, the water/oil (W/O-type) composition comprises 70-95% of the grease, 0.1-1% of the vegetable phospholipid, 1-12% of the bovine milk extract, and 0.1-5% of the monoglyceride and 5-25% or the balance of water; wherein the grease comprises 18-23 wt% of the rice oil, 27-31 wt% of the OPO structured fat, 27-31 wt% of the soybean oil, 17-21 wt% of the coconut oil and 0.5-2 wt% of the algae oil.

In one or more embodiments, on the basis of the total weight of the grease, in the grease, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

An eleventh aspect of the present invention provides a structured emulsion. On the basis of total weight of the structured emulsion, the structured emulsion comprises 3-10%, preferably 3.7-4.4%, of the water/oil (W/O-type) composition described in any embodiment of the tenth aspect of the present invention, 7-17 wt%, preferably 8-11 wt% by weight of a water-soluble component and 72.9%-90% or the balance of water.

In one or more embodiments, the water-soluble ingredient comprises a protein, a carbohydrate, a complex microbial mineral and a stabilizer.

In one or more embodiments, the protein comprises a bovine milk- or goat milk-derived whey protein, casein, a legume-derived protein, and a grain protein, and a partially or fully hydrolyzed protein from a bovine milk- or goat milk-derived whey protein, casein, or a legume-derived protein; preferably, the legume-derived protein is a soybean protein and/or a pea protein; preferably, the grain protein comprises one or more of a rice protein, a rice bran protein, a wheat protein, a rye protein, a sorghum protein, a corn protein, and an oat protein.

In one or more embodiments, the protein in the water-soluble ingredient is provided by a skim milk powder and a whey protein powder.

In one or more embodiments, on the basis of the total weight of the water-soluble ingredient, the content of the skimmed milk powder is 15-25 wt%, preferably 18-23 wt%, and the content of the whey protein powder is 5-13 wt%, preferably 7-11 wt%.

In one or more embodiments, the content of the protein is 12-18% on the basis of the total weight of the water-soluble ingredient.

In one or more embodiments, the carbohydrate comprises a digestible carbohydrate and an indigestible carbohydrate; wherein, the digestible carbohydrate comprises at least one of a lactose, a glucose, a galactose, a maltose, a sucrose, a fructose, a starch, a maltodextrin, a glucose syrup, and a corn syrup; the indigestible carbohydrate comprises at least one of a fructooligosaccharide, a galactooligosaccharide, a glucose oligosaccharide, a xylooligosaccharide, a mannan oligosaccharide and a cyclodextrin oligosaccharide.

In one or more embodiments, on the basis of the total weight of the water-soluble ingredient, the total content of the digestible carbohydrate is 60-75%, and the total content of the indigestible carbohydrate is $\leq 10\%$.

In one or more embodiments, the multivitamin mineral refers to a composition comprising one or more vitamins and/or one or more minerals; preferably, the vitamin comprises one or more of vitamin A, vitamin D, vitamin E, vitamin K1, vitamin B1, vitamin B2, vitamin B6, vitamin B12, niacin, folic acid, pantothenic acid, vitamin C and biotin; preferably, the mineral comprises at least one of sodium, potassium, copper, magnesium, iron, zinc, manganese, calcium, phosphorus, iodine, chlorine and selenium, optionally comprises choline and/or inositol.

In one or more embodiments, on the basis of the total weight of the water-soluble ingredient, the content of the complex microbial mineral is greater than or equal to 1.5%, preferably 2-6%.

In one or more embodiments, the stabilizer comprises one or more of a carrageenan, a locust bean gum, a gellan gum, a xanthan gum, a gelatin, an acacia gum, and a soybean polysaccharide.

In one or more embodiments, on the basis of the total weight of the water-soluble ingredient, the content of the stabilizer is 0.1-1%.

In one or more embodiments, on the basis of the total mass of the water-soluble component, the water-soluble component comprises 12-18% of the protein, 60-75% of the digestible carbohydrate, 2-6% of the multivitamin mineral, 0.1-1% of the stabilizer and $\leq 10\%$ of the indigestible oligosaccharide.

In one or more embodiments, on the basis of the total mass of the water-soluble component, the water-soluble component comprises: 15-25 wt%, preferably 18-23 wt% of the skimmed milk powder, 5-13 wt%, preferably 7-11 wt% of the whey protein powder, 60-70 wt% of the digestible carbohydrate, 2-6% of the multivitamin mineral and 0.1-1% of the stabilizer.

In one or more embodiments, on the basis of the total mass of the structured emulsion, the structured emulsion comprises 1.5-3 wt% of the skimmed milk powder, 0.5-1.2 wt% of the whey protein powder, 5-7 wt% of the digestible carbohydrate, 0.3-0.5 wt% of the multivitamin mineral, 0.03-0.08 wt% of the stabilizer, 3-5 wt% of the water/oil (W/O-type) composition, and the balance of water.

A twelfth aspect of the present invention provides a method for preparing the water/oil (W/O-type) composition of the present invention, characterized in that, the method comprises:

Step (1): mixing an monoglyceride, a vegetable phospholipid product and a grease and melting same to form an oil phase;
Step (2): mixing an animal phospholipid product with water and dissolving same to form a water phase;
Step (3): mixing the oil phase and the water phase uniformly and then rapidly cooling and kneading same.

In one or more embodiments, in step (1), the mixture of the monoglyceride, the vegetable phospholipid product and the grease are melted at 50-70°C.

In one or more embodiments, in step (2), the mixture of the animal phospholipid product and the water is stirred at room temperature to disperse the animal phospholipid product in the water.

In one or more embodiments, in step (3), the mixture of the oil phase and the water phase is stirred at 50-70°C for 10-30 min, and then immediately rapidly cooled and kneaded.

A thirteenth aspect of the present invention provides a method for preparing the structured emulsion described in any embodiment of the eleventh aspect herein, and the method comprises the following steps:

(1) providing the water/oil (W/O-type) composition described in any embodiment of the present invention as an oil phase;
(2) mixing the water-soluble ingredient with water to obtain a water phase composition;
(3) mixing and emulsifying the oil phase and the water phase compositions to obtain the emulsion; and optionally
(4) sterilizing the emulsion.

In one or more embodiments, in the above step (2), the water-soluble component and water are mixed and stirred below 35°C to form the water phase.

In one or more embodiments, the emulsification is selected from one or more of a shear emulsification, a colloid mill emulsification, a ball mill emulsification, a ultrasonic emulsification, a membrane emulsification, a microwave emulsification, a sonic emulsification or a self-emulsification.

In one or more embodiments, the shear emulsification is used, and the shear rate is 3000-20000 rpm and the shear time is 1-15 min.

In one or more embodiments, homogenization is performed after emulsification.

In one or more embodiments, the homogenization has a pressure of 10-500 bars, and performed for more than 3 cycles.

In one or more embodiments, in the step (3), the grease composition and the water phase composition are mixed at 33-38°C and stirred for less than 20 min, and then sheared and homogenized; preferably, the shear rate is $\leq$ 4000 rpm, and the shear time is 1-5 min; the homogenization has a pressure of $\leq$ 20 bars, and can be performed 1-5 times, preferably 3-5 times.

A fourteenth aspect of the present invention provides a dry powder or a water-reconstituted milk thereof, and the dry powder is a power obtained by drying the structured emulsion described in any embodiment of the eleventh aspect of the present invention or the structured emulsion prepared by the method described in any embodiment in the thirteenth aspect, preferably an infant formula milk powder; the water-reconstituted milk is an emulsion prepared by dissolving the dry powder with water.

In one or more embodiments, on the basis of the total mass of the dry powder, the dry powder comprises or consists of the following ingredients: 20-30% of a grease; 0.01-0.4%, preferably 0.01-0.2% of a vegetable phospholipid; 0.04-0.5%, preferably 0.05-0.4% of an animal phospholipid; 10-25% of a protein; 40-55% of a carbohydrate; 0.1-0.8% of a stabilizer; 1-5% of a multivitamin mineral; and 0.08-1.5% of an emulsifier; preferably, the grease comprises or consists of the following ingredients: on the basis of the total mass of the grease, 18-23 wt%, preferably 21 $\pm$ 1 wt% of a rice oil, 27-31 wt%, preferably 29 $\pm$ 1 wt% of an OPO structured fat, 27-31 wt%, preferably 29 $\pm$ 1 wt% of a soybean oil, 17-21 wt%, preferably 19 $\pm$ 1 wt% of a coconut oil, and 0.5-2 wt%, preferably 1 $\pm$ 0.5 wt% of an algae oil.

In one or more embodiments, the dry powder comprises: 12-17% of a skim milk powder, 5-8% of a whey protein powder, 40-50% of a carbohydrate, 2-4% of a multivitamin mineral, 0.2-0.6% of a stabilizer and 27-32% of the water/oil (W/O-type) composition described in any embodiment of the present invention.

A fifteenth aspect of the present invention provides use of the water/oil (W/O-type) composition described in any embodiment of the present invention in improving the digestion of lipids contained in food, or in the preparation of food with improved lipid digestion.

### Detailed Description of Embodiments

In order to make the features and effects of the present invention understandable to a person skilled in the art, the terms and words mentioned in the description and claims will be generally described and defined hereafter. Unless otherwise stated, all the technical and scientific words used herein possess the general meaning as known by a person skilled in the art for the present invention. The definition in the present invention is preferential, if a conflict exists.

The theories and mechanisms described and disclosed herein, regardless of their correctness, should not limit the scope of the present invention in any way, that is, the present invention can be embodied without being limited to any specific theory and mechanism.

All features which are defined herein by value ranges or percentage ranges, such as quantity, content and concentration, are only for the sake of briefness and convenience. Thus, the description of a value range or a percentage range should be considered as covering and particularly disclosing all possible sub-ranges and individual values in the range (including integral numbers and fractions).

For the sake of briefness, not all the possible combinations of the technical features in the embodiments or examples are described herein. Therefore, the technical features of the embodiments and examples can be combined as desire, as long as there is no contradiction in the combination of technical features, and all possible combinations should be considered as being covered by the scope of the description.

Grease composition

The invention provides a grease composition, which comprises a grease, a vegetable phospholipid, an animal phospholipid and an emulsifier.

The fatty acids in the grease used in the grease composition of the present invention is characterized by: the content of saturated fatty acids (SAFAs) is $\leq$ 45 wt%, the content of monounsaturated fatty acids (MUFAs) is $\leq$ 50 wt%, such as $\leq$ 35 wt%, the content of polyunsaturated fatty acids (PUFAs) is $\leq$ 35 wt%, such as $\leq$ 30 wt%. preferably, in terms of fatty acids in the grease composition of the present invention, the content of SAFA can be in the range of 35-45 wt%, preferably in the range of 37-45 wt%, 37-42 wt%, 38-42 wt%, or 38-40 wt%; the content of MUFA can be in the range of 25-35 wt%, preferably in the range of 25-32 wt%, 28-32 wt%, 28-31 wt%, or 29-30 wt%; the content of PUFA can be in the range of 20-35 wt%, preferably in the range of 20-30 wt%, 25-33 wt%, 28-34 wt%, 29-33 wt%, 25-30 wt%, 28-30 wt%, 29-30 wt% or 30-33 wt%.

In a preferred embodiment, the fatty acids in the grease used in the grease composition of the present invention comprises oleic acids, palmitic acids and linoleic acids, preferably, the mass ratio of oleic acids, palmitic acids and linoleic acids is (1.5-2.5):1 :(0.7-1.2). In some embodiments, the total mass of palmitic acids, oleic acids and linoleic acids accounts for more than 75 wt%, preferably more than 78 wt%, more than 79 wt%, or more than 80 wt% of the total weight of fatty acids in the grease composition. In some embodiments, in terms of fatty acids in the grease, on the basis of the total weight of the fatty acids, the content of palmitic acids is 18-25 wt%, preferably 21-25 wt%, 21-24 wt%, or 21-23 wt%. In some embodiments, in terms of fatty acids in the grease composition, on the basis of the total weight of the fatty acids, the content of oleic acids is 25-45 wt%, preferably 25-42 wt%, 27-42 wt%, 30-42 wt%, or 30-40 wt%. In some embodiments, in terms of fatty acids in the grease, on the basis of the total weight of the fatty acids, the content of the linoleic acids is 10-25 wt%, preferably 13-20 wt%, or 15-20 wt%.

The grease comprised in the grease composition of the present invention may comprise one or more of vegetable-derived, animal-derived and microbial-derived modified (for example, transesterified and/or fractionated) grease or non-modified grease, the vegetable-derived grease may be seed grease, including but not limited to one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter. The animal-derived grease comprises but not limited to one or more of a bovine milk-derived grease, a goat milk-derived grease, a buffalo milk-derived grease, a camel milk-derived grease and an aquatic animal-derived grease (such as fish oil and krill oil). The microbial-derived grease comprises one or more of an algae oil and a fungal oil. The grease may further comprise structured fats, especially various structured fats typically used in infant milk powder, such as OPO structured fat, that is, 1,3-dioleic acid-2-palmitic acid triglyceride.

In a preferred embodiment, the grease comprised in the grease composition of the present invention comprises or consists of a rice oil, an OPO structured fat, a soybean oil, a coconut oil and an algae oil. Preferably, in such a grease composition, on the basis of the total mass the grease, the content of the rice oil is 18-23 wt%, preferably 21 ± 1 wt%, the content of the OPO structured fat is 27-32 wt%, preferably 29 ± 1 wt%, the content of the soybean oil is 27-32 wt%, preferably 29 ± 1 wt%, the content of the coconut oil is 17-21 wt%, preferably 19 ± 1 wt%, the content of the algae oil is 0.5-2 wt%, preferably 1 ± 0.5 wt%.

In the grease composition of the present invention, on the basis of the total weight of the grease composition, the content of the grease is 70-95%, preferably 80-95%.

The term "phospholipid" as used herein may be a phospholipid known in the art and conventionally used in infant formula milk. Herein, the phospholipid has a well-known meaning herein, and is divided into two categories: glycerophospholipid and sphingomyelin. The phospholipid may be provided by a vegetable-derived phospholipid product and/or an animal-derived phospholipid product. Herein, "vegetable phospholipid product" has the same meaning as "vegetable-derived phospholipid product" and can be used interchangeably, and "animal phospholipid product" has the same meaning as "animal-derived phospholipid product" and can be used interchangeably; they refer to a phospholipid product which comprises, in addition to the phospholipid, other ingredients that inevitably exist in the production of a phospholipid product. Such phospholipid products can be obtained from commercial sources, and can also be prepared according to conventional methods in the art. Herein, "animal phospholipid" and "vegetable phospholipid" refer to pure phospholipid itself.

Preferably, the vegetable phospholipid product or the vegetable-derived phospholipid product comprise one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product. The animal-derived phospholipid product comprises a terrestrial animal-derived phospholipid product, such as a bovine milk-derived phospholipid product and an egg-derived phospholipid product, and an aquatic animal-derived phospholipid product, such as a fish-, shrimp-, and shellfish-derived phospholipid product. The fish may be, for example, yellow croaker.

The grease composition of the present invention can be prepared using one or more phospholipid products from the same source and/or from different sources. The preferred vegetable phospholipid product is a sunflower phospholipid product and/or a soybean phospholipid product, and the preferred animal phospholipid product is a bovine milk-derived phospholipid product.

In the grease composition of the present invention, on the basis of the total weight of the grease composition, the content of the vegetable phospholipid product (such as the sunflower phospholipid product and/or the soybean phospholipid product) is 0.1-1.5%. In terms of phospholipids, the content of the vegetable phospholipid in the grease composition of the present invention is 0.1-1%, preferably 0.1-0.5%.

Preferably, the animal phospholipid product is a milk extract, such as a cheese powder, an MFGM, a concentrated milk phospholipid powder and the like. Milk extracts known in the art can be used in the present invention. On the basis of the total weight of the grease composition, the content of the animal-derived phospholipid in the grease composition of the present invention is 0.2-1.0%, preferably 0.2-0.8%. The milk extract can be used in the grease composition of the present invention in the form of the cheese powder, the MFGM or the concentrated milk phospholipid powder, or in the form of any mixture thereof, as long as the content of the provided animal-derived phospholipid is within the range defined in the present invention. In a preferred embodiment, when using the milk extract such as the cheese powder, the MFGM and/or the concentrated milk phospholipid powder, the content of the milk extract is 1-12 wt% on the basis of the total weight of the grease composition.

Emulsifiers known in the art that can be added to food, especially infant formula milk, can be used in the grease composition of the present invention. Such emulsifiers comprise, but are not limited to, monoglycerides, lecithin, mono-diglyceride citrate, and the like. On the basis of the total weight of the grease composition, the content of the emulsifier in the grease composition of the present invention is 1-7%.

In some embodiments, the grease composition of the present invention comprises 70-95 wt% of a grease, 0.1-1 wt%, preferably 0.1-0.5 wt% of a vegetable phospholipid, 0.1-1.0 wt%, preferably 0.2-0.8 wt% of an animal phospholipid and 1-7 wt% of a monoglyceride, wherein the grease comprises 18-23 wt% a rice oil, 27-32 wt% of an OPO structured fat, 27-32 wt% of a soybean oil, 17-21 wt% of a coconut oil and 0.5-2 wt% of an algae oil. In some embodiments, the grease composition of the present invention comprises 70-95 wt% of a grease, 0.1-1.5 wt% of a vegetable phospholipid product, 1-12 wt% of a bovine milk extract (such as one or more of a milk cheese powder, an MFGM and a concentrated milk phospholipid powder) and 1-7 wt% of a monoglyceride, wherein the grease comprises 18-23 wt% of a rice oil, 27-32 wt% of an OPO structured fat, 27-32 wt% of a soybean oil, 17-21 wt% of a coconut oil and 0.5-2 wt% of an algae oil. Preferably, in the grease composition, the content of the grease is 80-95 wt%. Preferably, on the basis of the total weight of the grease, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

Additive composition

In some embodiments, the present invention provides an additive composition, which comprises or consists of a vegetable phospholipid, an animal phospholipid and an emulsifier, wherein on the basis of the total weight of the additive composition, the content of the vegetable phospholipid is 0.5-20 wt%, preferably 3-17 wt%, the content of the animal phospholipid is 2-15 wt%, preferably 3-12 wt%, and the content of the emulsifier is 10-48 wt%, preferably 15-45 wt%.

The phospholipid is as described above. The preferred vegetable phospholipid product is a sunflower phospholipid product and/or a soybean phospholipid product, and the preferred animal phospholipid product is a bovine milk-derived phospholipid product.

Preferably, the animal phospholipid product is a milk extract, such as a cheese powder, an MFGM, a concentrated milk phospholipid powder and the like. Milk extracts known in the art can be used in the present invention. In some embodiments, one or more of the cheese powder, the MFGM, the concentrated milk phospholipid powder, and the like are used. Therefore, preferably, in some embodiments, the additive composition of the present invention comprises or consists of 0.5-20 wt%, preferably 3-17 wt% of the vegetable phospholipid, 50-70 wt% of a bovine milk extract, and 10-48 wt%, preferably 15-45 wt% of the emulsifier.

Emulsifiers known in the art that can be added to food, especially infant formula milk, can be used in the grease composition of the present invention. Such emulsifiers comprise, but are not limited to, monoglycerides, lecithin, mono-diglyceride citrate, and the like. In a preferred embodiment, the emulsifier is a monoglyceride.

Adding the additive composition of the present invention to the grease helps to improve the lipid digestion rate of the structured emulsion containing the obtained grease composition, and improves the emulsion stability of the structured emulsion.

water/oil (W/O-type) composition

The invention provides a water/oil (W/O-type) composition, which can improve the digestion and absorption of lipids in infant formula milk.

The water/oil (W/O-type) composition of the present invention comprises a grease, a vegetable phospholipid, an animal phospholipid, an emulsifier and water.

The fatty acids in the grease used in the water/oil (W/O-type) composition of the present invention is characterized by: the content of saturated fatty acids (SAFAs) < 45%, the content of monounsaturated fatty acids (MUFAs) is ≤ 35%, the content of polyunsaturated fatty acids (PUFAs) is ≤ 35%. Preferably, in terms of fatty acids in the water/oil (W/O-type) composition of the present invention, the content of SAFA may be in the range of 35-45%, preferably in the range of 37-45%, 37-42%, 38-42%, or 38-40%; The content of MUFA may be in the range of 25-35%, preferably in the range of 25-32%, 28-32%, 28-31%, or 29-30%; the content of PUFA may be in the range of 20-35%, preferably in the range of 25-33%, 28-34%, 29-33%, or 30-33%.

In a preferred embodiment, the fatty acids in the grease used in the water/oil (W/O-type) composition of the present invention comprises oleic acids, palmitic acids and linoleic acids, preferably, the mass ratio of oleic acids, palmitic acids and linoleic acids is (1.5-2.5):1:(0.7-1.2). In some embodiments, the total mass of palmitic acids, oleic acids and linoleic acids accounts for more than 75%, preferably more than 78%, more than 79%, or more than 80% of the total weight of the fatty acids in the water/oil (W/O-type) composition. In some embodiments, in terms of fatty acids in the grease, on the basis of the total weight of the fatty acids, the content of palmitic acids is 18-25%, preferably 21-25%, 21-24%, or 21-23%. In some embodiments, in terms of fatty acids in the water/oil (W/O-type) composition, on the basis of the total weight of the fatty acids, the content of oleic acids is 25-45%, preferably 25-42%, 27-42%, 30-42%, or 30-40%. In some embodiments, in terms of fatty acids in the grease, on the basis of the total weight of the fatty acids, the content of the linoleic acids is 10-25%, preferably 13-20% or 15-20%.

The grease comprised in the water/oil (W/O-type) composition of the present invention may comprise one or more of vegetable-derived, animal-derived and microbial-derived modified (for example, transesterified and/or fractionated) grease or non-modified grease. the vegetable-derived grease may be seed grease, including but not limited to one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter. The animal-derived grease comprises but not limited to one or more of a bovine milk-derived grease, a goat milk-derived grease, a buffalo milk-derived grease, a camel milk-derived grease and an aquatic animal-derived grease (such as fish oil and krill oil). The microbial-derived grease comprises one or more of an algae oil and a fungal oil. The grease may further comprise structured fats, especially various structured fats typically used in infant milk powder, such as OPO structured fat, that is, 1,3-dioleic acid-2-palmitic acid triglyceride.

In a preferred embodiment, the grease comprised in the water/oil (W/O-type) composition of the present invention comprises or consists of a rice oil, an OPO structured fat, a soybean oil, a coconut oil and an algae oil. Preferably, in such a water/oil (W/O-type) composition, on the basis of the total mass the grease, the content of the rice oil is 18-23 wt%, preferably 21 ± 1 wt%, the content of the OPO structured fat is 27-32 wt%, preferably 29 ± 1 wt%, the content of the soybean oil is 27-32 wt%, preferably 29 ± 1 wt%, the content of the coconut oil is 17-21 wt%, preferably 19 ± 1 wt%, the content of the algae oil is 0.5-2 wt%, preferably 1 ± 0.5 wt%.

In the water/oil (W/O-type) composition of the present invention, on the basis of the total weight of the water/oil (W/O-type) composition, the content of the grease is 70-95%, preferably 70-85%.

Phospholipids suitable for use in the water/oil (W/O-type) composition of the present invention are as defined above.

The water/oil (W/O-type) composition of the present invention can be prepared using one or more phospholipid products from the same source and/or from different sources. The preferred vegetable phospholipid product is a sunflower phospholipid product and/or a soybean phospholipid product, and the preferred animal phospholipid product is a bovine milk-derived phospholipid product.

In the water/oil (W/O-type) composition of the present invention, on the basis of the total weight of the water/oil (W/O-type) composition, the content of the vegetable phospholipid is 0.05-1%, preferably 0.07-0.5%. In the water/oil (W/O-type) composition of the present invention, on the basis of the total weight of the water/oil (W/O-type) composition, the content of the vegetable phospholipid product may be 0.1-1.5%, preferably 0.1-0.9%.

Preferably, the animal phospholipid product may be a milk extract, such as a cheese powder, an MFGM, a concentrated milk phospholipid powder and the like. Milk extracts known in the art can be used in the present invention. On the basis of the total weight of the water/oil (W/O-type) composition, the content of the animal-derived phospholipid in the water/oil (W/O-type) composition of the present invention is 0.2-0.8%. The milk extract can be used in the water/oil (W/O-type) composition of the present invention in the form of the cheese powder, the MFGM or the concentrated milk phospholipid powder, or in the form of any mixture thereof, as long as the content of the provided animal-derived phospholipid is within the range (0.2-0.8%) defined in the present invention. In some embodiments, when the animal-derived phospholipid is provided in the form of the milk extract (such as one or more of the cheese powder, the MFGM, and the concentrated milk phospholipid powder), on the basis of the total weight of the water/oil (W/O-type) composition, the content of the milk extract may be in the range of 1-12%, preferably 2-8%.

Emulsifiers known in the art that can be added to food, especially infant formula milk, can be used in the water/oil (W/O-type) composition of the present invention. Such emulsifiers comprise, but are not limited to, monoglycerides, lecithin, mono-diglyceride citrate, and the like. Various commercially available monoglycerides can be used to prepare the water/oil (W/O-type) composition of the present invention. Exemplary commercially available monoglycerides comprise, but are limited to, those specifically used in the examples herein. On the basis of the total weight of the water/oil (W/O-type) composition, the content of the emulsifier in the water/oil (W/O-type) composition of the present invention is 0.1-5%, preferably 0.3-4%.

On the basis of the water/oil (W/O-type) composition, the content of water in the water/oil (W/O-type) composition of the present invention may be 5-25%, such as 8-25%.

In some embodiments, the water/oil (W/O-type) composition of the present invention comprises 70-95% of the grease, 0.05-1% of the vegetable phospholipid, 0.2-0.8% of the animal phospholipid, 0.1-5% of the monoglyceride and 5-25% or the balance of water. Preferably, the water/oil (W/O-type) composition comprises 70-85% of the grease, 0.07-0.5% of the vegetable phospholipid, 0.2-0.8% of the animal phospholipid, 0.3-4% of the monoglyceride and 8-25% or the balance of water. Preferably, the grease comprises 18-23 wt% of the rice oil, 27-32 wt% of the OPO structured fat, 27-32 wt% of the soybean oil, 17-21 wt% of the coconut oil and 0.5-2 wt% of the algae oil; more preferably, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

In some embodiments, the water/oil (W/O-type) composition of the present invention comprises 70-95% of the grease, 0.1-1.5% of the vegetable phospholipid product, 2-10% of the bovine milk extract, and 0.1-5% of the monoglyceride and 5-25% or the balance of water. Preferably, the water/oil (W/O-type) composition comprises 70-85% of the grease, 0.1-0.9% of the vegetable phospholipid product, 3-8% of the milk extract, 0.3-4% of the monoglyceride and 8-25% or the balance of water. Preferably, the grease comprises 18-23 wt% of the rice oil, 27-32 wt% of the OPO structured fat, 27-32 wt% of the soybean oil, 17-21 wt% of the coconut oil and 0.5-2 wt% of the algae oil; more preferably, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

Structured emulsion

The present invention provides a structured emulsion comprising the grease composition or water/oil (W/O-type) composition described in any embodiment herein.

In some embodiments, the structured emulsion provided by the present invention comprises the grease composition described in any embodiment herein, a water-soluble ingredient (a water-soluble component) and water, or comprises the grease described in any embodiment herein, the additive composition described herein, a water-soluble ingredient and water.

In some embodiments, the structured emulsion provided by the present invention comprises the water/oil (W/O-type) composition described in any embodiment herein, a water-soluble ingredient (a water-soluble component) and water.

The water-soluble ingredient that can be used in the structured emulsion of the present invention can be a water-soluble ingredient conventionally used in the art to prepare a structured emulsion, including but not limited to a protein, a carbohydrate, a complex microbial minerals, and a stabilizer.

The protein can be a protein that is conventionally added to formula milk, including but not limited to a bovine milk- or goat milk-derived whey protein, casein, a legume-derived protein, a grain protein, and a partially or fully hydrolyzed protein from a bovine milk- or goat milk-derived whey protein, casein, or a legume-derived protein. The legume-derived protein may be selected from a soybean protein and/or a pea protein. The grain protein includes, but are not limited to one or more of a rice protein, a rice bran protein, a wheat protein, a rye protein, a sorghum protein, a corn protein, and an oat protein. The content of the protein is typically 12-18% in the water-soluble ingredient of the present invention. In some embodiments, the protein in the water-soluble component is provided by a skim milk powder and a whey protein powder. Preferably, on the basis of the total weight of the water-soluble component, the content of the skimmed milk powder may be 15-25%, preferably 18-23%, and the content of the whey protein powder may be 5-13%, preferably 7-11%.

The carbohydrate comprises a digestible carbohydrate and an indigestible carbohydrate. The digestible carbohydrate is typically a sugars conventionally added to formula milk powder, including but not limited to at least one of a lactose, a glucose, a galactose, a maltose, a sucrose, a fructose, a starch, a maltodextrin, a glucose syrup and a corn syrup. Preferably, more than 60% of the digestible carbohydrate is the lactose. The indigestible carbohydrate is typically an indigestible oligosaccharide which comprises but not limited to at least one of a fructooligosaccharide, a galactooligosaccharide, a glucose oligosaccharide, a xylooligosaccharide, a mannan oligosaccharide and a cyclodextrin oligosaccharide. In the water-soluble ingredient of the present invention, the total content of the digestible carbohydrate is typically 60-75%, and the total content of the indigestible carbohydrate is typically ≤ 10%.

In the present invention, the multivitamin mineral refers to a composition comprising one or more vitamins and/or one or more minerals. The vitamin comprises but not limited to one or more of vitamin A, vitamin D, vitamin E, vitamin K1, vitamin B1, vitamin B2, vitamin B6, vitamin B12, niacin, folic acid, pantothenic acid, vitamin C and biotin. The mineral comprises but are not limited to at least one of sodium, potassium, copper, magnesium, iron, zinc, manganese, calcium, phosphorus, iodine, chlorine and selenium. Choline and/or inositol may also be comprised in the complex microbial mineral. In the water-soluble ingredient of the present invention, the content of the complex microbial mineral is typically greater than or equal to 1.5%, preferably 2-6%.

In the present invention, the stabilizer may be a stabilizer conventionally added to formula milk powder, including but not limited to one or more of a carrageenan, a locust bean gum, a gellan gum, a xanthan gum, a gelatin, an acacia gum and a soybean polysaccharide. The content of the stabilizer is typically 0.1-1% in the water-soluble ingredient of the present invention.

In a preferred embodiment, on the basis of the total mass of the water-soluble component, the water-soluble component comprises 12-18% of the protein, 60-75% of the digestible carbohydrate, 2-6% of the multivitamin mineral, 0.1-1% of the stabilizer and ≤ 10% of the indigestible oligosaccharide.

In a preferred embodiment, on the basis of the total mass of the water-soluble component, the water-soluble component comprises: 15-25%, preferably 18-23% of the skimmed milk powder, 5-13%, preferably 7-11% of the whey protein powder, 60-70% of the digestible carbohydrate, 2-6% of the multivitamin mineral and 0.1-1% of the stabilizer.

On the basis of the total mass of the structured emulsion, in the structured emulsion of the present invention, the content of the grease composition or water/oil (W/O-type) composition described in any embodiment herein may be 3-10%, preferably 3.7-4.4%.

On the basis of the total mass of the structured emulsion, the content of the grease described herein in the structured emulsion of the present invention may be 2.5-5 wt%, preferably 3-4 wt%.

On the basis of the total mass of the structured emulsion, the content of the additive composition described herein in the structured emulsion of the present invention may be 0.1-0.8 wt%.

On the basis of the total mass of the structured emulsion, the content of the water-soluble component in the structured emulsion of the present invention may be 7-17%, preferably 8-11%.

In some embodiments, on the basis of the total mass of the structured emulsion, the structured emulsion of the present invention comprises 3-10% of the grease composition or water/oil (W/O-type) composition described in any embodiment herein, 7-17% of the water-soluble component described in any embodiment herein, and 73-90% or 72.9-90% or the balance of water. In some embodiments, on the basis of the total mass of the structured emulsion, the structured emulsion of the present invention comprises 3-10 wt% of the grease composition described in any embodiment herein, and 7-17 wt% of the water-soluble component described in any embodiment herein and the balance of water. In some embodiments, on the basis of the total mass of the structured emulsion, the structured emulsion of the present invention comprises 3.7-4.4% of the grease composition or water/oil (W/O-type) composition described in any embodiment herein, 8-11% of the water-soluble component described herein and the balance of water. Typically, the balance of water is in the range of 72.9-90%, such as 73-90%.

In some embodiments, on the basis of the total mass of the structured emulsion, the structured emulsion of the present invention comprises 2.5-5 wt% of the grease described herein, 0.1-0.8 wt% of the additive composition described herein, 7-17 wt% of the water-soluble component described herein and the balance of water. Typically, the content of the balance of water is in the range of 73 wt%-90 wt%.

preferably, on the basis of the total mass of the structured emulsion, the structured emulsion comprises 1.5-3 wt% of the skimmed milk powder, 0.5-1.2 wt% of the whey protein powder, 5-7 wt% of the digestible carbohydrate, 0.3-0.5 wt% of the multivitamin mineral, 0.03-0.08 wt% of the stabilizer, 3-5 wt% of the water/oil (W/O-type) composition, and the balance of water. Typically, the balance of water is in the range of 72.9-90%.

Preparation method

The method for preparing the water/oil (W/O-type) composition of the present invention comprises:

Step (1): mixing an monoglyceride, a vegetable phospholipid product and a grease and melting same to form an oil phase;
Step (2): mixing an animal phospholipid product with water and dissolving same to form a water phase;
Step (3): mixing the oil phase and the water phase uniformly and then rapidly cooling and kneading same.

preferably, in step (1), the mixture of the monoglyceride, the vegetable phospholipid product and the grease are melted at 50-70°C. The mixture can be mixed by stirring. In step (2), preferably, stirring is performed at room temperature to disperse the animal phospholipid product in the water. In step (3), preferably, the mixture of the oil phase and the water phase is stirred at 50-70°C for 10-30 min, and then immediately rapidly cooled and kneaded. Herein, a water bath may be used to provide the desired temperature.

The method for preparing the structured emulsion of the present invention comprises the following steps:

(1) providing the grease composition or water/oil (W/O-type) composition of the present invention as an oil phase;
(2) mixing a water-soluble ingredient with water to obtain a water phase composition;
(3) mixing and emulsifying the oil phase and the water phase compositions to obtain the emulsion.

In a preferred embodiment, the method further comprises step (4): sterilizing the emulsion.

In some embodiments, in the above step (1), the vegetable phospholipid product, the animal phospholipid product, the emulsifier, and 10-20% of the grease in the formula are weighed, heated and stirred at 70-90°C for 20-40 min (stirring speed > 200 rpm), and cooled to room temperature; then the remaining grease is added, heated to 55-65°C, stirred further for 10-30 min (stirring speed > 200 rpm), and cooled to 28-33°C; then the stirring speed is adjusted to 40-60 rpm, and the stirring is performed for another 3-8 min; the mixture is rapidly cooled using an ice-water bath immediately and kneaded for 15-30 min. In this way, the grease composition is prepared.

In a preferred embodiment, in the above step (1), the water/oil (W/O-type) composition is prepared by the method for preparing the water/oil (W/O-type) composition described in the present invention.

In the above step (2), the water-soluble component such as the protein, the carbohydrate, the complex microbial mineral and the stabilizer can be mixed with water and stirred to dissolve each component in the water to form the water phase. Stirring can be performed below 35°C.

In the above step (3), the grease composition or water/oil (W/O-type) composition and the water phase composition are mixed and then treated by one or more methods of a shear emulsification, a colloid mill emulsification, a ball mill emulsification, a ultrasonic emulsification, a membrane emulsification, a microwave emulsification, a sonic emulsification or a self-emulsification. When the shear emulsification is used, the shear rate may be 3000-20000 rpm and the shear time may be 1-15 min; when the ultrasonic emulsification is used, the ultrasonic power density may be 60-300 W/cm$^2$ and the ultrasonic treatment time may be 1-20 min.

In some embodiments, in the above step (3), the grease composition or the water/oil (W/O-type) composition and the water phase composition may be mixed, and then subjected to shearing, and/or homogenization, and/or micro-jet emulsification. Preferably, the shear rate is 3000-20000 rpm; the shear time is 1-15 min. Preferably, the micro-jet has a pressure of 10-500 bar, and performed for more than 3 cycles.

In some embodiments, homogenization is performed after shearing, preferably, the homogenization has a pressure of 10-500 bar, and performed for more than 3 cycles.

In some embodiments, in the above step (3), the grease composition or water/oil (W/O-type) composition and the water phase composition are mixed at 33-38°C (such as in a water bath at 33-38°C), stirred for less than 20 min, and then sheared and homogenized. Preferably, the shear rate is ≤ 4000 rpm, and the shear time is 1-5 min; the homogenization has a pressure of ≤ 20 bars, and can be performed 1-5 times.

In the above step (4), the sterilization can be pasteurization, high temperature instantaneous sterilization or high pressure sterilization. In some embodiments, the emulsion obtained in step (3) is kept at 60-85°C for 15 s to 30 min for pasteurization. In other embodiments, the emulsion obtained in step (3) is kept at 110-140°C for 1-30 s for high temperature instantaneous sterilization. Alternatively, the emulsion obtained in step (3) is kept under a pressure of 100-600 MPa for 5-30 min for ultrahigh pressure sterilization.

The present invention comprises the structured emulsion prepared by the method of the present invention.

The present invention further provides a method for preparing a composition for use in food, and the method comprises the step of drying the structured emulsion described in the present invention.

Drying methods include, but are not limited to, one or more of high-temperature spray drying, electrostatic low-temperature spray, vacuum freeze drying, and cold air spray drying.

In some embodiments, the high temperature spray drying is used to dry the structured emulsion, the inlet air temperature is 120-200°C, and the outlet air temperature is 60-110°C.

In some embodiments, the cold air spray drying is used to dry the structured emulsion, the inlet air temperature is 70-110°C, and the outlet air temperature is 35-50°C.

Other products

In some embodiments, the present invention further provides a dry powder, which is the powder obtained by drying the structured emulsion of the present invention, that is, the composition for use in food described herein.

In some embodiments, on the basis of the total mass of the composition for use in food, the composition for use in food of the present invention comprises or consists of the following ingredients: 20-30 wt% of a grease component; 0.03-0.5 wt% of a vegetable phospholipid; 0.05-0.5%, preferably 0.07-0.35% of an animal phospholipid; 10-25 wt% of a protein; 40-55 wt% of a carbohydrate; 0.1-0.8 wt% of a stabilizer; 1-5 wt% of a multivitamin mineral; and 0.1-3.0 wt% of an emulsifier. Preferably, the grease component is the grease described herein, preferably, the grease component comprises or consists of the following ingredients: on the basis of the total mass of the grease component, 18-23 wt%, preferably 21 ± 1 wt% of a rice oil, 27-31 wt%, preferably 29 ± 1 wt% of an OPO structured fat, 27-31 wt%, preferably 29 ± 1 wt% of a soybean oil, 17-21 wt%, preferably 19 ± 1 wt% of a coconut oil, and 0.5-2 wt%, preferably 1 ± 0.5 wt% of an algae oil. Preferably, the dry powder of the present invention is milk powder, such as infant formula milk powder. In some embodiments, the dry powder of the present invention comprises: 12-17 wt% of a skim milk powder, 5-8 wt% of a whey protein powder, 40-50 wt% of a carbohydrate, 2-4 wt% of a multivitamin mineral, 0.2-0.6 wt% of a stabilizer and 27-32 wt% of the grease composition of the present invention.

In some embodiments, on the basis of the total mass of the composition for use in food, the composition for use in food of the present invention comprises or consists of the following ingredients: 20-30% of a grease; 0.01-0.4%, preferably 0.01-0.2% of a vegetable phospholipid; 0.04-0.5%, preferably 0.05-0.4% of an animal phospholipid; 10-25% of a protein; 40-55% of a carbohydrate; 0.1-0.8% of a stabilizer; 1-5% of a multivitamin mineral; and 0.08-1.5% of an emulsifier. Preferably, the grease is the grease described herein. Preferably, the grease comprises or consists of the following ingredients: on the basis of the total mass of the grease, 18-23 wt%, preferably 21 ± 1 wt% of a rice oil, 27-31 wt%, preferably 29 ± 1 wt% of an OPO structured fat, 27-31 wt%, preferably 29 ± 1 wt% of a soybean oil, 17-21 wt%, preferably 19 ± 1 wt% of a coconut oil, and 0.5-2 wt%, preferably 1 ± 0.5 wt% of an algae oil. Preferably, the dry powder of the present invention is milk powder, such as infant formula milk powder. In some embodiments, the dry powder of the present invention comprises: 12-17% of a skim milk powder, 5-8% of a whey protein powder, 40-50% of a carbohydrate, 2-4% of a multivitamin mineral, 0.2-0.6% of a stabilizer and 27-32% of the water/oil (W/O-type) composition of the present invention.

The present invention also provides a water-reconstituted milk, which comprises the dry powder (milk powder) of the present invention and is prepared by dissolving the dry powder in water.

The present invention further provides a food composition, which comprises the phospholipid composition of the present invention; or comprises the grease composition or water/oil (W/O-type) composition of the present invention; or comprises the structured emulsion of the present invention; or comprises the structured emulsion prepared by the method of the present invention; or comprises the composition for use in food of the present invention; or comprises the composition for use in food prepared by the method of the present invention.

In some embodiments, the food composition is in the form of an emulsion or a powder. The food composition can also be in the form of a tablet, a block, a capsule, a pill, or a semi-emulsion.

In some embodiments, the food composition is a nutritional fortifier.

The food composition of the present invention can be used as a food product (food) or a food additive or used for the manufacture of a food product or a food additive. Accordingly, the present invention relates to a food product or a food additive comprising or consisting essentially of the food composition of the present invention or comprising an emulsion formed by re-dispersing the food composition of the present invention.

In the present invention, the food product can be consumed by different groups including but not limited to mammals, ruminants, poultry and humans.

According to the present invention, the method for preparing the food product or the food additive comprises adding the food composition of the present invention to the raw materials for the preparation of the food product or the food additive during the preparation process. The food composition of the present invention may be mixed with one or more food ingredients and/or additives to prepare the food product or the food additive of the present invention.

The food product or the food additive can be used directly or mixed with an aqueous medium before use. The aqueous medium may be water, milk (such as whole milk, semi skimmed milk or skimmed milk), yoghurt, beverages (such as soft drinks, for example fruit juices), soy milk beverages, rice beverages, vegetable-based beverages, milkshakes, coffee or tea. In some embodiments, the food product described in the present invention is a formula food.

Other methods and uses

The present invention also provides a method for promoting digestion and absorption of an animal, the method comprises using the food product of the present invention as part or all of the food ingested by the animal. The present invention also provides the use of a grease composition, a water/oil (W/O-type) composition, an additive composition, a structured emulsion, a composition for use in food, a food composition, a food product and a food additive of the present invention in preparing a food for promoting digestion and absorption of an animal. The animal comprises a mammals and a ruminant. The mammal comprises human. In some embodiments, the human comprises an infant, a pregnant women, a middle-aged and elderly people, and people with weakened immunity. In some embodiments, the food is a formula food.

The present invention also provides the use of a grease composition, a water/oil (W/O-type) composition or an additive composition of the present invention in improving the digestion of lipids contained in food, or in the preparation of food with improved lipid digestion. Herein, the "digestion" refers to the enzymatic hydrolysis of lipids, which can be represented by the lipolysis degree described herein. Preferably, the lipolysis degree of the structured emulsion or the water-reconstituted milk thereof provided by the present invention at 120 min is above 65%, more preferably above 68%.

The following examples are further elaborations of the present invention, but the content of the present invention is not limited by the following content. The embodiments in the specification of the present invention are only used to illustrate the present invention, and do not limit the protection scope of the present invention. The protection scope of the present invention is limited only by the claims, and any omission, substitution or modification made by those skilled in the art on the basis of the disclosed embodiments of the present invention will fall within the protection scope of the present invention.

Conventional instruments and equipments in the art are used in the following examples. The experimental methods not specified for the specific conditions in the following embodiments are generally carried out in accordance with conventional conditions or in accordance with the conditions recommended by the manufacturer. Various starting materials are used in the following examples, and conventional commercially available products are used unless otherwise stated. In the specification of the present invention and the following examples, "%" means percentage by weight, "part" means part by weight, unless otherwise specified.

The detection methods used in the following examples and comparative examples are as follows.

Determination of the stability of the grease composition or water/oil (W/O-type) composition:

The appearance state of the product and the oil separation rate after standing: the grease composition or water/oil (W/O-type) composition was put in a 50 mL centrifuge tube and left at 30°C for 24 h. The appearance state of the product was visually observed and the oil separation rate was determined. The oil separation rate of the grease composition or water/oil (W/O-type) composition after standing = m/M* 100%, where m is the mass of the grease separated from the grease composition or water/oil (W/O-type) composition (g), and M is the total mass of the grease composition or water/oil (W/O-type) composition (g).

The oil separation rate after centrifugation: the grease composition or water/oil (W/O-type) composition was put in a 50 mL centrifuge tube and left at 30°C for 24 h and centrifuged at 3500 rpm, wherein, the oil separation rate of the grease composition or water/oil (W/O-type) composition after centrifugation = m/M*100%, where m is the mass of the grease separated from the grease composition or water/oil (W/O-type) composition after centrifugation (g), and M is the total mass of the grease composition or water/oil (W/O-type) composition before centrifugation (g).

Simulated digestion of the structured emulsion *in vitro* for infants:

1) Stomach digestion stage: 20 mL of reconstituted milk of infant formula milk powder was taken and placed in a glass reactor with a water bath jacket, and the pH was adjusted to 5.3; 45 mL of simulated gastric digestion solution (pepsin 650 U/mL, lipase 87 U/mL, NaTC 80 $\mu$M, NaCl 68 mM, Tris 2 mM, maleic acid 2 mM, phospholipid 20 $\mu$M, pH 5.3) was added; 0.25 M NaOH was added dropwise to keep the pH of the system at 5.3 (pH-STAT), and reacted for 60 min with magnetic stirring under a water bath at 37°C; the consumed NaOH was recorded to calculate the molar content of the free fatty acids (FFA) produced. After the gastric digestion reaction was completed, excess alkaline liquor was added to make the pH of the system exceed 9, so as to inactivate the enzymes, and all the reaction mixture was transferred to the subsequent small intestine digestion.

2) Small intestine digestion stage: 1 M NaOH was used to adjust the gastric digestion solution to pH 6.6, and 97.5 mL of simulated intestinal digestion solution (pancreatin 500 USP/mL, NaTC 2 mM, NaCl 150 mM, Tris 2 mM, maleic acid 2 mM, phospholipid 0.18 mM, pH 6.6) was added, 0.25 M NaOH was added dropwise to keep the pH of the system at 6.6 (pH-STAT), and reacted for 120min with magnetic stirring under a water bath at 37°C; the consumed NaOH was recorded to calculate the molar content of the free fatty acids (FFA) produced.

3) Lipolysis degree: Lipolysis degree represented the release percentage of free fatty acids (FFA) of triglycerides in the initial emulsion, and can be calculated by the following formula:

$$LD = \frac{FFA \times MMeq}{FC \times V \times 3}$$

wherein, LD: lipolysis degree (%), FFA: free fatty acid content (mol, can be obtained from the moles of NaOH consumed), MMeq: average molecular weight of triglyceride in emulsion (g/mol), FC: fat concentration (g/mL), V: emulsion volume.

Emulsion stability analysis (40°C): The stability of the emulsion at 40°C was analyzed by TURBISCAN LAB universal stability analyzer. Parameter setting: Temperature: 40°C, scanning frequency: 5 min/time, detection time: 6 h. The thermodynamic instability index (TSI) of the emulsion and the peak thickness at the top of the emulsion were recorded over time.

**Example I**

**Raw material source**

Skimmed milk powder: Fonterra, New Zealand;

Cheese powder: Fonterra, New Zealand, with a phospholipid content of 7.6%;
MFGM: Arla Foods Ingredients Group, Danish, with a phospholipid content of 7.2%;
Concentrated bovine milk phospholipid powder: Avril Group, French, with a phospholipid content of 18.5%;
Whey protein concentrate powder: Fonterra, New Zealand;
Lactose: Leprino food, USA;
Sunflower phospholipid: Qinhuangdao Jinhai Cereal&Oil Industry Co., Ltd.;
Soybean phospholipid: Qinhuangdao Jinhai Cereal&Oil Industry Co., Ltd.;
Vegetable oil: Shanghai Kerry Food Industries Co., Ltd.;
DHA algae oil: CABIO Biotech (Wuhan) Co., Ltd.;
Locust bean gum: DuPont, USA;
Carrageenan: Danisco, USA;
Vitamin mineral premix: Customized from DSM Corporation;
Monoglyceride: DuPont Danisco.

Preparation method of the grease compositions of examples 1a-5a and comparative examples 1a-6a:

(1) The vegetable phospholipid, the cheese powder/MFGM/concentrated milk phospholipid powder, the monoglyceride and 10-20% of the grease in the formula were weighed according to Table 2, heated and stirred at 80°C for 30 min (stirring speed > 200 rpm), and cooled to room temperature for later use and the obtained mixture was recorded as mixture A;
(2) The remaining grease was added into the mixture A and stirred at 60°C for another 20 min (stirring speed > 200 rpm) and the obtained mixture was recorded as mixture B;
(3) The mixture B was cooled to 30°C, the stirring speed was adjusted to 40-60 rpm, and the stirring was further performed for 5 min; then the mixture was rapidly cooled using an ice-water bath immediately and kneaded for 20 min.

Preparation method of the grease composition of comparative example 7a:

(1) The materials were weighed according to Table 2, the cheese powder, the vegetable phospholipid, the monoglyceride and the grease were mixed and stirred under a water bath at 60°C for 20 min (stirring speed > 200 rpm), and the obtained mixture was recorded as mixture A;
(2) The mixture A was cooled to 30°C, the stirring speed was adjusted to 40-60 rpm, and the stirring was further performed for 5 min; then the mixture was rapidly cooled using an ice-water bath immediately and kneaded for 20 min.

Preparation method of the grease composition of comparative example 8a:

(1) the cheese powder, the vegetable phospholipid, the monoglyceride and 10-20% of the grease in the formula were weighed according to Table 2, heated and stirred at 80°C for 30 min (stirring speed > 200 rpm), and cooled to room temperature for later use and the obtained mixture was recorded as mixture A;
(2) The remaining grease was added into the mixture A and stirred at 60°C for another 20 min (stirring speed > 200 rpm) and the obtained mixture was recorded as mixture B;
(3) Then the mixture was rapidly cooled using an ice-water bath immediately and kneaded for 20 min.

Preparation method of the grease composition of comparative example 9a:

(1) the cheese powder, the vegetable phospholipid, the monoglyceride and 10-20% of the grease in the formula were weighed according to Table 2, heated and stirred at 80°C for 30 min (stirring speed > 200 rpm), and cooled to room temperature for later use and the obtained mixture was recorded as mixture A;
(2) The remaining grease was added into the mixture A and stirred at 60°C for another 20 min (stirring speed > 200 rpm) and the obtained mixture was recorded as mixture B;
(3) The mixture B was cooled to 30°C, the stirring speed was adjusted to 40-60 rpm, and the stirring was further performed to shape.

The grease formulations of examples 1a-5a and comparative examples 1a-9a are shown in Table 1 below.

Table 1: Formula of blended oil

| | Type of grease | weight percentage | Fatty acid composition of blended oil |
|---|---|---|---|
| Grease (blended oil) | Rice oil (RBO) | 21.2 | SFA: 36.9%, MUFA: 41.7%, PUFA: 21.4%; Oleic acids: 39.86%, Palmitic acid: 20.07%, Linoleic acids: 18.59%; Sn-2 palmitic acid/%: (by total palmitic acid): 32.41% |
| | OPO55 | 29.5 | |
| | Soybean oil (SBO) | 29.3 | |
| | Coconut Oil (CNO) | 19.0 | |
| | DHA algae oil (AO) | 1.0 | |

Table 2: Formula of the grease composition of the examples and comparative examples

| Example/ comparative example | Amount of usage of blended oil/g | Amount of usage of monoglyceride/g | Amount of usage and source of vegetable phospholipid product | | | Amount of usage and source of animal phospholipid product | | |
|---|---|---|---|---|---|---|---|---|
| | | | Amount of usage of vegetable phospholipid product/g | Vegetable phospholipid product source | Vegetable phospholipid content/g | Animal phospholipid product source | Amount of usage of animal phospholipid product/g | Animal phospholipid content/g |
| Example 1a | 87.9 | 5.0 | 0.5 | Sunflower phospholipid | 0.27 | Cheese powder | 6.6 | 0.5 |
| Example 2a | 94.1 | 1.0 | 1.0 | Sunflower phospholipid | 0.16 | Cheese powder | 3.9 | 0.3 |
| Example 3a | 82.3 | 7.0 | 0.2 | Sunflower phospholipid | 0.43 | Cheese powder | 10.5 | 0.8 |
| Example 4a | 86.9 | 4.0 | 0.8 | Soybean phospholipid | 0.31 | MFGM | 8.3 | 0.6 |
| Example 5a | 93.8 | 2.0 | 0.4 | Soybean phospholipid | 0.36 | Concentrated bovine milk phospholipid powder | 3.8 | 0.7 |
| Comparative example 1a | 94.5 | 5.0 | 0.5 | Sunflower phospholipid | 0 | / | / | 0 |
| Comparative example 2a | 88.4 | 5.0 | 0 | Sunflower phospholipid | 0.27 | Cheese powder | 6.6 | 0.5 |
| Comparative example 3a | 92.1 | 0.5 | 0.5 | Soybean phospholipid | 0.26 | MFGM | 6.9 | 0.5 |
| Comparative example 4a | 88.8 | 8.0 | 0.5 | Soybean phospholipid | 0.26 | Concentrated bovine milk phospholipid powder | 2.7 | 0.5 |
| Comparative example 5a | 91.2 | 5.0 | 1.2 | Sunflower phospholipid | 0.11 | Cheese powder | 2.6 | 0.2 |
| Comparative example 6a | 83.1 | 5.0 | 0.1 | Soybean phospholipid | 0.47 | Cheese powder | 11.8 | 0.9 |

EP 4 272 579 A1

20

| Example/ comparative example | Amount of usage of blended oil/g | Amount of usage of monoglyceride/g | Amount of usage and source of vegetable phospholipid product | | | Amount of usage and source of animal phospholipid product | | |
|---|---|---|---|---|---|---|---|---|
| | | | Amount of usage of vegetable phospholipid product/g | Vegetable phospholipid product source | Vegetable phospholipid content/g | Animal phospholipid product source | Amount of usage of animal phospholipid product/g | Animal phospholipid content/g |
| Comparative example 7a | 87.9 | 5.0 | 0.5 | Sunflower phospholipid | 0.27 | Cheese powder | 6.6 | 0.5 |
| Comparative example 8a | 87.9 | 5.0 | 0.5 | Sunflower phospholipid | 0.27 | Cheese powder | 6.6 | 0.5 |
| Comparative example 9a | 87.9 | 5.0 | 0.5 | Sunflower phospholipid | 0.27 | Cheese powder | 6.6 | 0.5 |

The preparation method of the structured emulsion of examples 1a-5a and comparative Examples 1a-9a is as follows:

Step (1): The grease composition prepared in this example and comparative example was weighed according to the formula in Table 3, heated and stirred at 60°C to form an oil phase;

Step (2): 20 g of skim milk powder, 8.8 g of whey protein powder, 61g of lactose, 3.9g of complex microbial mineral, 0.6 g of stabilizer (0.45 g of locust bean gum, and 0.15 g of carrageenan) and 866.5 g of water were mixed and stirred under a water bath below 35°C to form a water phase;

Step (3): the oil phase and the water phase were mixed, stirred under a water bath at 35°C for 15 min, and then sheared and homogenized; the shear rate was 3000 rpm, the shear time was 3 min and the homogenization condition was: 20 bars, 3 times; and

Step (4): The emulsion was kept under a water bath at 65°C for 30 minutes for pasteurization, and then cooled to room temperature to obtain the structured emulsions of the examples and comparative examples.

Table 3: Base formula of structured emulsion

| Raw material name | | Content (g) |
|---|---|---|
| Water phase | Skimmed milk powder | 20 |
| | Whey protein powder | 8.8 |
| | Lactose | 61 |
| | Vitamin mineral premix | 3.9 |
| | Locust bean gum | 0.45 |
| | Carrageenan | 0.15 |
| | Water | 866.5 |
| Oil phase | Grease composition | 39.2 |
| Total energy | | 652 Kcal |
| Total quality | | 1000 |

The stability and appearance state of the grease compositions prepared in examples 1a-5a and comparative examples 1a-9a are shown in Table 4.

Table 4: Stability and appearance state of grease composition

| Example/ comparative example | Appearance state of product | Oil separation rate after standing/% | Oil separation rate after centrifugation/% |
|---|---|---|---|
| Example 1a | The system is stable, and the surface is smooth and delicate | 0 | 1.1 |
| Example 2a | The system is stable, and the surface is smooth and delicate | 0 | 1.3 |
| Example 3a | The system is stable, and the surface is smooth and delicate | 0 | 1.5 |
| Example 4a | The system is stable, and the surface is smooth and delicate | 0 | 1.7 |
| Example 5a | The system is stable, and the surface is smooth and delicate | 0 | 1.9 |
| Comparative example 1a | The system is stable, and the surface is smooth and delicate | 0 | 1.8 |
| Comparative example 2a | The system is stable, and the surface is smooth and delicate | 0 | 1.6 |

(continued)

| Example/ comparative example | Appearance state of product | Oil separation rate after standing/% | Oil separation rate after centrifugation/% |
|---|---|---|---|
| Comparative example 3a | The system is layered, and a small amount of grease is separated out | 1.6 | 8.2 |
| Comparative example 4a | The system is stable and the product is rough | 0 | 0.8 |
| Comparative example 5a | The system is layered, and a small amount of grease is separated out | 1.1 | 9.7 |
| Comparative example 6a | The system is layered, a small amount of grease is separated out, the product has air bubbles, and the system is uneven | 1.7 | 12.3 |
| Comparative example 7a | The system is layered, and a small amount of grease is separated out | 0.8 | 3.6 |
| Comparative example 8a | The system is layered, and some grease is separated out | 5.4 | 13.6 |
| Comparative example 9a | The system is layered, and some grease is separated out | 8.1 | 24.5 |

It can be seen from Table 4 that the grease compositions prepared in examples 1a-5a and comparative examples 1a-2a have stable systems, smooth and delicate surfaces, no oil separation after standing at 30°C for 1 day, and an oil separation rate after centrifugation of less than 2%. Although the grease composition prepared in comparative Example 4a has a stable system, the surface of the grease composition is rough, which affects the appearance. However, after the grease compositions of other comparative examples were placed at 30°C for one day, the system was layered, and the grease was separated out, which showed that only the grease compositions prepared in examples 1a-5a and comparative examples 1a-2a had stable systems and good appearances.

Comparative example 10a: Amallon infant formula milk (Amallon-1 series, purchased from a shopping mall in Denmark).

Comparative example 11a: Abbott stage 1 infant formula milk (Similac series, purchased from a shopping mall in Las Vegas, USA).

Comparative example 12a: Breast milk (taken from a donor, Shanghai, aged 28-35).

The lipolysis degree and the emulsion stability of the structured milk prepared in examples 1a-3a and comparative example 1a-2a, the emulsion of commercial milk powder and the breast milk (taken from a donor, Shanghai, aged 28-35) were tested, and the results are shown in Table 5 and Table 6.

Table 5: Change of the lipolysis degree during *in vitro* digestion of infants

| Time | G-0 | G-10 | G-30 | G-60 | I-10 | I-30 | I-60 | I-120 |
|---|---|---|---|---|---|---|---|---|
| Example 1a | 0 | 5.34 | 5.34 | 5.34 | 62.49 | 65.91 | 69.97 | 71.23 |
| Example 2a | 0 | 5.21 | 5.21 | 5.21 | 61.76 | 64.75 | 67.98 | 69.86 |
| Example 3a | 0 | 5.45 | 5.45 | 5.45 | 61.78 | 65.97 | 68.73 | 70.09 |
| Example 4a | 0 | 5.23 | 5.23 | 5.23 | 60.98 | 64.34 | 67.91 | 68.92 |
| Example 5a | 0 | 5.19 | 5.19 | 5.19 | 61.02 | 65.31 | 68.12 | 70.23 |
| Comparative example 1a | 0 | 5.12 | 5.12 | 5.12 | 52.03 | 56.89 | 59.01 | 61.19 |
| Comparative example 2a | 0 | 5.37 | 5.37 | 5.37 | 54.21 | 58.12 | 58.97 | 60.45 |
| Comparative example 10a | 0 | 5.68 | 5.68 | 5.68 | 50.13 | 55.05 | 58.13 | 61.73 |
| Comparative example 11a | 0 | 5.86 | 6.34 | 6.81 | 53.38 | 56.26 | 58.70 | 62.00 |
| Comparative example 12a | 0 | 6.12 | 6.12 | 6.12 | 59.22 | 63.09 | 66.69 | 72.24 |

Table 6: Stability analysis of infant formula emulsion or water-reconstituted milk (40°C)

| Example/comparative example | 6 h TSI index | Peak thickness at the top/mm |
|---|---|---|
| Example 1a | 6.3±0.3 | 2.2±0.2 |
| Example 2a | 6.4±0.2 | 2.4±0.3 |
| Example 3a | 6.2±0.4 | 2.3±0.3 |
| Example 4a | 6.3±0.2 | 2.3±0.3 |
| Example 5a | 6.5±0.1 | 2.5±0.2 |
| Comparative example 1a | 6.2±0.2 | 2.4±0.2 |
| Comparative example 2a | 6.1±0.4 | 2.3±0.3 |
| Comparative example 10a | 3.5±0.4 | 2.0±0.2 |
| Comparative example 11a | 2.3±0.1 | 2.0±0.1 |
| Comparative example 12a | 42±6.8 | 8.8±1.3 |

It can be seen from Table 5 that the lipolysis degree of the structured milk prepared in examples 1a-5a is closer to that of breast milk (comparative example 12a), and is much higher than that of comparative examples 1a and 2a and the emulsions of commercial milk powders (comparative example 10a and comparative example 11a).

The kinetic instability index (TSI) can intuitively reflect the stability of the emulsion. In general, the larger the TSI value of the emulsion, the worse its stability, and vice versa. The emulsion generally rises to varying degrees during storage, and a creaming layer of a certain thickness is formed on the top of the emulsion. In general, the higher the peak thickness at the top of the emulsion at a certain temperature and within a certain period of time, the greater the degree of rising of the emulsion, and the worse the stability of the emulsion, and vice versa. According to the stability results of the structured milk, the water-reconstituted milk, and the breast milk in Table 6, it can be known that the structured milk and water-reconstituted milk prepared by the present invention have a TSI index of less than 7 when stored at 40°C for 6 hours, and have a peak thickness at their top of less than 3.0 mm, indicating that the emulsion prepared by the present invention have good emulsion stability.

**Example II**

**Raw material source**

Skimmed milk powder: Fonterra, New Zealand;
Whey protein concentrate powder: Fonterra, New Zealand;
Cheese powder: Fonterra, New Zealand, with a phospholipid content of 7.6%;
MFGM: Arla Foods Ingredients Group, Danish, with a phospholipid content of 7.2%;
Concentrated bovine milk phospholipid powder: Avril Group, French, with a phospholipid content of 18.5%;
Lactose: Leprino food, USA;
Bovine milk sphingomyelin: Avanti polar lipids company, USA.
Sunflower phospholipid: Yihai Kerry;
Soybean phospholipid: Yihai Kerry;
Vegetable oil: Shanghai Kerry Food Industries Co., Ltd.;
DHA algae oil: CABIO Biotech (Wuhan) Co., Ltd.;
Locust bean gum: DuPont, USA;
Carrageenan: Danisco, USA;
Vitamin mineral premix: Customized from DSM Corporation;
Monoglyceride (MAG-PV): Tianjin Rikevita Food Co., Ltd.;
Monoglyceride (MAG-PM): Tianjin Rikevita Food Co., Ltd.;
Monoglyceride (MAG-(CF-01)): Yihai Kerry;
Monoglyceride (MAG-KW): Guangzhou Kaiwen Food Development Co., Ltd.

Table 7: Formula of blended oil (the sum is not 100%, please check)

|  | Type of grease | Proportion/% | Fatty acid composition of blended oil |
|---|---|---|---|
| Blended oil | Rice oil (RBO) | 21.2 | SFA: 36.9%, MUFA: 41.7%, PUFA: 21.4%;<br><br>Oleic acid: 39.86%, Palmitic acid: 20.07%, Linoleic acids: 18.59%;<br><br>Sn-2 palmitic acid/% (by total palmitic acid): 32.41% |
| | OPO55 | 29.5 | |
| | Soybean oil (SBO) | 29.3 | |
| | Coconut Oil (CNO) | 19.0 | |
| | DHA algae oil (AO) | 1.0 | |

Table 8: Formula of the water/oil (W/O-type) composition of the examples and comparative examples

| Example/ compara- tive example | Oil phase | | Monoglyceride | | | Vegetable phospholipid Animal phospholipid | | | | | | Water phase | |
|---|---|---|---|---|---|---|---|---|---|---|---|---|---|
| | Oil phase % | Blended oil mass/g | Type of monoglyceride | Saturated fitty acid content in monoglyc- cridc/%. | Monoglycer- ide mass/g | Vegetable phospholip- id source | Amount of usage of vegetable phospholip- id product/g | Vegetable phospholip- id content/g | Animal phos- pholipid prod- uct | Correspond- ing material msaa/g | Animal phospholipid content/g | Water phase ratio/% | Water/g |
| Example 1b | 85 | 82.02 | MAG-PV | 100 | 2.55 | Sunflower phospholipid | 0.43 | 0.23 | Cheese powder | 5.6 | 0.43 | 15 | 9.4 |
| Example 2b | 75 | 70.5 | MAG-(GF-01) | 99 | 3.75 | Sunflower phospholipid | 0.75 | 0.41 | Cheese powder | 3 | 0.23 | 25 | 22 |
| Example 3b | 80 | 79.44 | MAG-PV | 100 | 0.4 | Sunflower phospholipid | 0.16 | 0.09 | Bovine milk sphingomyelin | 8 | 0.63 | 20 | 12 |
| Example 4b | $5 | 82.02 | MAG-PV, AG- PM | 90 | 2.55 | Soybean phospholipid | 0.43 | 0.22 | MFGM | 5.6 | 0.4 | 15 | 9.4 |
| Example 5b | 85 | 82.02 | MAG-(CF- 01), MAG-KW | 95 | 1.55 | Soybean phospholipid | 0.43 | 0.22 | Concentrated bovine milk phospholipid powder | 4 | 0.74 | 15 | 9.4 |
| Comparative example 1b | 85 | 82.02 | MAG-PM | 51 | 2.55 | Sunflower phospholipid | 0.43 | 0.23 | Cheese powder | 5.6 | 0.43 | 15 | 9.4 |
| Comparative example 2b | 85 | 82.02 | MAG-KW | 67 | 2.55 | Sunflower phospholipid | 0.43 | 0.23 | MFGM | 5.6 | 0.4 | 15 | 9.4 |
| Comparative example 3b | 85 | 82.02 | MAG-PV, MAG-PM | 80 | 2.55 | Soybean phospholipid | 0.43 | 0.22 | Concentrated bovine milk phospholipid powder | 5.6 | 1.04 | 15 | 9.4 |

(continued)

| Example/ comparative example | Oil phase | | Monoglyceride | | | Vegetable phospholipid Animal phospholipid | | | | | | Water phase | |
|---|---|---|---|---|---|---|---|---|---|---|---|---|---|
| | Oil phase % | Blended oil mass/g | Type of monoglyceride | Saturated fitty acid content in monoglyccridc/%. | Monoglyceride mass/g | Vegetable phospholipid source | Amount of usage of vegetable phospholipid product/g | Vegetable phospholipid content/g | Animal phospholipid product | Corresponding material msaa/g | Animal phospholipid content/g | Water phase ratio/% | Water/g |
| Comparative example 4b | 85 | 82.02 | MAG-PV | 100 | 2.55 | Soybean phospholipid | 0.43 | 0.22 | / | | / | 15 | 15 |
| Comparative example 5b | 85 | 82.45 | MAG-PV | 100 | 2.55 | Sunflower phospholipid | / | / | Cheese powder | 5.6 | 0.43 | 15 | 9.4 |
| Comparative example 6b | 85 | 84.31 | MAG-PV | 100 | 0.26 | Soybean phospholipid | 0.43 | 0.22 | Bovine milk sphingomyelin | 5.6 | 0.43 | 15 | 9.4 |
| Comparative example 7b | 85 | 79.47 | MAG-PV | 100 | 5.1 | Sunflower phospholipid | 0.43 | 0.23 | Cheese powder | 5.6 | 0.43 | 15 | 9.4 |
| Comparative example 8b | 85 | 31.43 | MAG-PV | 100 | 2.55 | Sunflower phospholipid | 1.02 | 0.55 | Cheese powder | 2.2 | 0.17 | 15 | 12.8 |
| Comparative example 9b | 85 | 82.36 | MAG-PV | 100 | 2.55 | Sunflower phospholipid | 0.09 | 0.05 | Cheese powder | 10.1 | 0.77 | 15 | 4.9 |
| Comparative example 10b | 70 | 67.55 | MAG-PV | 100 | 2.1 | Soybean phospholipid | 0.35 | 0.18 | Cheese powder | 4.6 | 0.35 | 30 | 25.4 |
| Comparative example lib | 90 | 86.85 | MAG-PV | 100 | 2.7 | Soybean phospholipid | 0.45 | 0.23 | Cheese powder | 5.9 | 0.45 | 10 | 4.1 |
| Comparative example 12b | 85 | 82.02 | MAG-PV | 100 | 2.55 | Sunflower phospholipid | 0.43 | 0.23 | Cheese powder | 5.6 | 0.43 | 15 | 9.4 |

(continued)

| Example/ comparative example | Oil phase | | Monoglyceride | | | Vegetable phospholipid Animal phospholipid | | | | | | Water phase | |
|---|---|---|---|---|---|---|---|---|---|---|---|---|---|
| | Oil phase % | Blended oil mass/g | Type of monoglyceride | Saturated fitty acid content in monoglyccridc/%. | Monoglyceride mass/g | Vegetable phospholipid source | Amount of usage of vegetable phospholipid product/g | Vegetable phospholipid content/g | Animal phospholipid product | Corresponding material msaa/g | Animal phospholipid content/g | Water phase ratio/% | Water/g |
| Comparative example 13b | 85 | 82.02 | MAG-PV | 100 | 2.55 | Sunflower phospholipid | 0.43 | 0.23 | Cheese powder | 5.6 | 0.43 | 15 | 9.4 |

Table 9: Base formula of structured emulsion

| Raw material name | | Content (g) |
|---|---|---|
| Water phase | Skimmed milk powder | 20 |
| | Whey protein powder | 8.8 |
| | Lactose | 61 |
| | Vitamin mineral premix | 3.9 |
| | Locust bean gum | 0.45 |
| | Carrageenan | 0.15 |
| | Water | 866.5 |
| Oil phase | From water/oil (W/O-type) composition | 39.2 |
| Total energy | | 652 Kcal |
| Total quality | | 1000 |

Preparation method of examples 1b-5b and comparative examples 1b-11b:
The method for preparing the water/oil (W/O-type) composition is as follows:

Step (1): The grease, the monoglyceride and the phospholipid were weighed according to the formula in Table 8, and stirred under a water bath at 60°C to form an oil phase;
Step (2): The cheese powder was weighed according to the formula in Table 8, mixed with water, and stirred at room temperature for 2 h to form a water phase.
Step (3): The water phase was slowly added to the oil phase, stirred at 60°C for 20 min, and immediately rapidly cooled and kneaded into shape.

The method for preparing the structured emulsion is as follows:

Step (1): The W/O type lipid product prepared in each example and comparative example was weighed according to the formula in Table 9, heated and stirred at 60°C to form an oil phase;
Step (2): 20 g of skim milk powder, 8.8 g of whey protein powder, 61g of lactose, 3.9g of complex microbial mineral, 0.6 g of stabilizer (0.45 g of locust bean gum, and 0.15 g of carrageenan) and 866.5 g of water were mixed and stirred under a water bath below 35°C to form a water phase;
Step (3): the oil phase and the water phase were mixed, stirred under a water bath at 35°C for 15 min, and then sheared and homogenized; the shear rate was 3000 rpm, the shear time was 3 min and the homogenization condition was: 20 bars, 3 times; and
Step (4): The emulsion was kept under a water bath at 65°C for 30 minutes for pasteurization, and then cooled to room temperature to obtain the structured emulsions of example 1b and comparative examples.

Preparation method of comparative example 12b:
The method for preparing the water/oil (W/O-type) composition is as follows:

Step (1): The grease, the monoglyceride and the phospholipid were weighed according to the formula in Table 8 and stirred under a water bath at 60°C, and cooled down to 45°C after completely melting to form an oil phase;
Step (2): The cheese powder was weighed according to the formula in Table 8, mixed with water, and stirred at room temperature for 2 h to form a water phase.
Step (3): The water phase was slowly added to the oil phase, stirred at 45°C for 20 min, and immediately rapidly cooled and kneaded into shape.

The preparation method of the structured emulsion is the same as the preparation methods of examples 1b-5b and comparative examples 1b-11b .
Preparation method of comparative example 13b:
The method for preparing the water/oil (W/O-type) composition is as follows:

Step (1): The grease, the monoglyceride and the phospholipid were weighed according to the formula in Table 8, and stirred under a water bath at 60°C to form an oil phase;

Step (2): The cheese powder was weighed according to the formula in Table 8, mixed with water, and stirred at room temperature for 2 h to form a water phase.

Step (3): The water phase was slowly added to the oil phase, stirred at 60°C for 20 min, and cooled naturally to shape.

The preparation method of the structured emulsion is the same as the preparation methods of examples 1b-5b and comparative examples 1b-11b .

The stability and appearance state of the water/oil (W/O-type) compositions prepared in examples 1b-5b and comparative examples 1b-1b3 are shown in Table 10.

Table 10: Stability and appearance state of water/oil (W/O-type) composition

| Example/ comparative example | Appearance state of product | Oil separation rate after standing/% | Oil separation rate after centrifugation/% |
|---|---|---|---|
| Example 1b | The system is stable, and the surface is smooth and delicate | 0 | 2.3 |
| Example 2b | The system is stable, and the surface is smooth and delicate | 0 | 2.9 |
| Example 3b | The system is stable, and the surface is smooth and delicate | 0 | 2.7 |
| Example 4b | The system is stable, and the surface is smooth and delicate | 0 | 2.8 |
| Example 5b | The system is stable, and the surface is smooth and delicate | 0 | 2.6 |
| Comparative example 1b | The system is layered, and a small amount of grease is separated out | 4.2 | 15.1 |
| Comparative example 2b | The system is layered, and a small amount of grease is separated out | 3.1 | 12.9 |
| Comparative example 3b | The system is layered, and a small amount of grease is separated out | 2.7 | 10.8 |
| Comparative example 4b | The system is stable, and the surface is smooth and delicate | 0 | 2.5 |
| Comparative example 5b | The system is stable, and the surface is smooth and delicate | 0 | 2.8 |
| Comparative example 6b | The system is layered, and a small amount of grease is separated out | 5.2 | 18.1 |
| Comparative example 7b | The system is stable and the surface is rough | 0 | 1.7 |
| Comparative example 8b | The system is layered, and a small amount of grease is separated out | 2.6 | 12.7 |
| Comparative example 9b | The system is layered, and a small amount of grease is separated out | 3.4 | 15.6 |
| Comparative example 10b | The system is layered, and a small amount of grease is separated out | 5.4 | 19.8 |
| Comparative example 11b | The system is stable and the surface is rough | 0 | 1.9 |
| Comparative example 12b | The system is layered, and some grease is separated out | 18.7 | 37.2 |

(continued)

| Example/ comparative example | Appearance state of product | Oil separation rate after standing/% | Oil separation rate after centrifugation/% |
|---|---|---|---|
| Comparative example 13b | The system is layered, and some grease is separated out | 15.3 | 26.7 |

It can be seen from Table 10 that the water/oil (W/O-type) compositions prepared in examples 1b-5b and comparative examples 4b-5b have stable systems, smooth and delicate surfaces, no oil separation after standing at 30°C for 1 day, and an oil separation rate after centrifugation of less than 3%. Although comparative example 7b and comparative example 11b have stable systems, the surface is rough, which affects the appearance. However, after the water/oil (W/O-type) compositions of other comparative examples were placed at 30°C for one day, the system was layered, and the grease was separated out, which showed that only the water/oil (W/O-type) compositions prepared in examples 1b-5b and comparative examples 4b-5b had stable systems and good appearances.

Comparative example 14b (same as comparative example 10a): Amallon infant formula milk (Amallon-1 series, purchased from a shopping mall in Denmark).

Comparative example 15b (same as comparative example 11a): Abbott stage 1 infant formula milk (Similac series, purchased from a shopping mall in Las Vegas, USA).

Comparative example 16b (same as comparative example 12a): Breast milk (taken from a donor, Shanghai, aged 28-35).

The lipolysis degree and the emulsion stability of the structured milk prepared in examples 1b-5b and comparative examples 4b-5b, the emulsion of commercial milk powder and the breast milk (taken from a donor, Shanghai, aged 28-35) were tested, and the results are shown in Table 11 and Table 12.

Table 11: Change of the lipolysis degree during *in vitro* digestion of infants

| Time | G-0 | G-10 | G-30 | G-60 | I-10 | I-30 | I-60 | I-120 |
|---|---|---|---|---|---|---|---|---|
| Example 1b | 0 | 5.35 | 5.35 | 5.35 | 62.77 | 65.91 | 69.34 | 70.19 |
| Example 2b | 0 | 5.53 | 5.53 | 5.53 | 62.08 | 65.35 | 68.34 | 69.75 |
| Example 3b | 0 | 5.29 | 5.29 | 5.29 | 61.54 | 64.45 | 67.21 | 68.73 |
| Example 4b | 0 | 5.31 | 5.31 | 5.31 | 61.79 | 65.32 | 68.91 | 70.76 |
| Example 5b | 0 | 5.19 | 5.19 | 5.19 | 60.89 | 64.87 | 67.92 | 68.92 |
| Comparative example 4b | 0 | 5.25 | 5.25 | 5.25 | 53.37 | 55.87 | 58.31 | 60.01 |
| Comparative example 5b | 0 | 5.35 | 5.36 | 5.36 | 54.31 | 57.89 | 59.81 | 62.08 |
| Comparative example 14b | 0 | 5.68 | 5.68 | 5.68 | 50.13 | 55.05 | 58.13 | 61.73 |
| Comparative example 15b | 0 | 5.86 | 6.34 | 6.81 | 53.38 | 56.26 | 58.70 | 62.00 |
| Comparative example 16b | 0 | 6.12 | 6.12 | 6.12 | 59.22 | 63.09 | 66.69 | 72.24 |

Table 12: Stability analysis of infant formula emulsion or water-reconstituted milk (40°C)

| Example/comparative example | 6 h TSI index | Peak thickness at the top/mm |
|---|---|---|
| Example 1b | 6.2±0.2 | 2.2±0.2 |
| Example 2b | 6.3±0.3 | 2.3±0.3 |
| Example 3a | 6.4±0.2 | 2.5±0.2 |
| Example 4b | 6.0±0.3 | 2.3±0.3 |
| Example 5b | 6.2±0.2 | 2.4±0.2 |
| Comparative example 4b | 6.1±0.3 | 2.4±0.1 |
| Comparative example 5b | 6.2±0.2 | 2.2±0.4 |

(continued)

| Example/comparative example | 6 h TSI index | Peak thickness at the top/mm |
|---|---|---|
| Comparative example 14b | 3.5±0.4 | 2.0±0.2 |
| Comparative example 15b | 2.3±0.1 | 2.0±0.1 |
| Comparative example 16b | 42±6.8 | 8.8±1.3 |

It can be seen from Table 11 that the lipolysis degree of the structured milk prepared in examples 1b-5b is closer to that of breast milk (comparative example 16b), and is much higher than that of comparative examples 4b and 5b and the emulsions of commercial milk powders (comparative example 14b and comparative example 15b).

The kinetic instability index (TSI) can intuitively reflect the stability of the emulsion. In general, the larger the TSI value of the emulsion, the worse its stability, and vice versa. The emulsion generally rises to varying degrees during storage, and a creaming layer of a certain thickness is formed on the top of the emulsion. In general, the higher the peak thickness at the top of the emulsion at a certain temperature and within a certain period of time, the greater the degree of rising of the emulsion, and the worse the stability of the emulsion, and vice versa. According to the stability results of the structured milk, the water-reconstituted milk, and the breast milk in Table 12, it can be known that the structured milk and water-reconstituted milk prepared by the present invention have a TSI index of less than 10 when stored at 40°C for 6 hours, and have a peak thickness at their top of less than 3.0 mm, indicating that the emulsion prepared by the present invention have good emulsion stability.

**Claims**

1. A grease composition, **characterized in that** the grease composition comprises or consists of a grease, a vegetable phospholipid, an animal phospholipid and an emulsifier;

preferably, on the basis of the total weight of the grease composition, the content of the grease is 70-95%, preferably 80-95%; preferably, on the basis of the total weight of the grease composition, the content of the vegetable phospholipid is 0.1-1%, preferably 0.1-0.5%; preferably, on the basis of the total weight of the grease composition, the content of the animal phospholipid is 0.2-1.0%, preferably 0.2-0.8%; preferably, on the basis of the total weight of the grease composition, the content of the emulsifier in the grease composition is 1-7%;

preferably, the fatty acids of the grease are **characterized by**: the content of saturated fatty acids (SAFAs) is ≤ 45 wt%, the content of monounsaturated fatty acids (MUFAs) is ≤ 50 wt%, such as ≤ 35 wt%, the content of polyunsaturated fatty acids (PUFAs) is ≤ 35 wt%, such as ≤ 30 wt%;

preferably, the fatty acids of the grease comprise oleic acids, palmitic acids and linoleic acids, and preferably, the mass ratio of oleic acids, palmitic acids and linoleic acids is (1.5-2.5):1:(0.7-1.2); preferably, on the basis of the total weight of the fatty acids, the content of palmitic acids is 18-25 wt%; preferably, on the basis of the total weight of the fatty acids, the content of oleic acids is 25-45 wt%; preferably, on the basis of the total weight of the fatty acids, the content of the linoleic acids is 10-25 wt%;

preferably, the grease comprises one or more of a vegetable-derived modified or non-modified grease, an animal-derived modified or non-modified grease and a microbial-derived modified or non-modified grease; preferably, the vegetable-derived grease is selected from one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter; the animal-derived grease is selected from one or more of a bovine milk-derived grease, a goat milk-derived grease, a buffalo milk-derived grease, a camel milk-derived grease and an aquatic animal-derived grease, and the microbial-derived grease comprises one or more of an algae oil and a fungal oil;

preferably, the grease comprises or consists of a rice oil, an OPO structured fat, a soybean oil, a coconut oil and an algae oil; preferably, on the basis of the total mass of the grease, the content of the rice oil is 18-23 wt%, preferably 21 ± 1 wt%, the content of the OPO structured fat is 27-31 wt%, preferably 29 ± 1 wt%, the content of the soybean oil is 27-31 wt%, preferably 29 ± 1 wt%, the content of the coconut oil is 17-21 wt%, preferably 19 ± 1 wt%, and the content of the algae oil is 0.5-2 wt%, preferably 1 ± 0.5 wt%;

preferably, the vegetable phospholipid is derived from a vegetable phospholipid product selecting from one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product; the animal phospholipid is derived from a terrestrial animal-derived animal phospholipid product, such as a bovine milk-derived phospholipid product and an egg-derived phospholipid product, and an aquatic animal-derived phospholipid product, such as a fish-, shrimp-, and shellfish-derived phospholipid product;

preferably, the vegetable phospholipid product is a sunflower phospholipid and/or a soybean phospholipid, and the animal phospholipid product is a bovine milk-derived phospholipid product; more preferably, the animal phospholipid product comprises one or more of a cheese powder, an MFGM and a concentrated bovine milk phospholipid powder; preferably, the grease composition comprises a bovine milk extract, and the content of the bovine milk extract is 1-12 wt% on the basis of the total weight of the grease composition;

preferably, the grease composition comprises 70-95 wt% of the grease, 0.1-1 wt% of the vegetable phospholipid, 0.3-0.8% of the animal-derived phospholipid and 1-7 wt% of a monoglyceride, wherein the grease comprises 18-23 wt% of the rice oil, 27-31 wt% of the OPO structured lipid, 27-31 wt% of the soybean oil, 17-21 wt% of the coconut oil and 0.5-2 wt% of the algae oil; or the grease composition comprises 70-95 wt% of the grease, 0.2-1 wt% of the vegetable phospholipid, 1-12 wt% of the bovine milk extract and 1-7 wt% of the monoglyceride, wherein the grease comprises 18-23 wt% of the rice oil, 27-31 wt% of the OPO structured fat, 27-31 wt% of the soybean oil, 17-21 wt% of the coconut oil and 0.5-2 wt% of the algae oil;

preferably, on the basis of the total weight of the grease, in the grease, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

2. An additive composition, **characterized in that** the additive composition comprises or consists of a vegetable phospholipid, an animal phospholipid and an emulsifier; preferably, on the basis of the total weight of the additive composition, the content of the vegetable phospholipid is 0.5-20 wt%, preferably 3-17 wt%, the content of the animal phospholipid is 2-15 wt%, preferably 3-12 wt%, and the content of the emulsifier is 10-48 wt%, preferably 15-45 wt%;

preferably, the vegetable phospholipid and the animal phospholipid are as defined in claim 1;
preferably, the additive composition comprises or consists of 0.5-20 wt%, preferably 3-17 wt% of the vegetable phospholipid, 50-70 wt% of a bovine milk extract, and 10-48 wt%, preferably 15-45 wt% of the emulsifier.

3. A water/oil (W/O-type) composition, **characterized in that**, the water/oil (W/O-type) composition comprises a grease, a vegetable phospholipid, an animal phospholipid, an emulsifier and water;
wherein, on the basis of the total weight of the water/oil (W/O-type) composition, the content of the grease is 70-95%, preferably 70-85%, the content of the vegetable phospholipid is 0.05-1%, preferably 0.07-0.5%, and the content of the animal phospholipid is 0.2-0.8%, the content of the emulsifier is 0.1-5%, preferably 0.3-4%, the content of the water is 5-25% or the balance.

4. The water/oil (W/O-type) composition of claim 3, **characterized in that**, the fatty acids of the grease are **characterized by**: the content of saturated fatty acids is ≤ 45%, the content of monounsaturated fatty acids is ≤ 35%, and the content of polyunsaturated fatty acids is < 35%;

preferably, the fatty acids of the grease comprise oleic acids, palmitic acids and linoleic acids, and preferably, the mass ratio of oleic acids, palmitic acids and linoleic acids is (1.5-2.5):1:(0.7-1.2); preferably, on the basis of the total weight of the fatty acids, the content of palmitic acids is 18-25%; preferably, on the basis of the total weight of the fatty acids, the content of oleic acids is 25-45%; preferably, on the basis of the total weight of the fatty acids, the content of the linoleic acids is 10-25%;
preferably, the grease comprises one or more of a vegetable-derived modified or non-modified grease, an animal-derived modified or non-modified grease and a microbial-derived modified or non-modified grease;
preferably, the vegetable-derived grease is selected from one of or a mixture of two or more of a soybean oil, a coconut oil, a rice oil, a rapeseed oil, a sunflower seed oil, a corn oil, an olive oil, a palm oil, a palm kernel oil, a palm stearin, a high oleic sunflower seed oil, a peanut oil, a linseed oil, a safflower oil, a cottonseed oil, a mango kernel oil, an avocado kernel oil, a shea nut oil, and an illipe butter; the animal-derived grease is selected from one or more of a bovine milk-derived grease, a goat milk-derived grease, a buffalo milk-derived grease, a camel milk-derived grease and an aquatic animal-derived grease, and the microbial-derived grease comprises one or more of an algae oil and a fungal oil;
preferably, the grease comprises or consists of a rice oil, an OPO structured fat, a soybean oil, a coconut oil and an algae oil; preferably, on the basis of the total mass of the grease, the content of the rice oil is 18-23 wt%, preferably 21 ± 1 wt%, the content of the OPO structured fat is 27-31 wt%, preferably 29 ± 1 wt%, the content of the soybean oil is 27-31 wt%, preferably 29 ± 1 wt%, the content of the coconut oil is 17-21 wt%, preferably 19 ± 1 wt%, and the content of the algae oil is 0.5-2 wt%, preferably 1 ± 0.5 wt%.

5. The water/oil (W/O-type) composition of claim 4, **characterized in that**, the vegetable phospholipid is derived from a vegetable phospholipid product selecting from one or more of a soybean-derived phospholipid product, a sunflower seed-derived phospholipid product, a rapeseed-derived phospholipid product, a peanut-derived phospholipid product, a rice-derived phospholipid product, a rice bran-derived phospholipid product, a sesame-derived phospholipid product, a linseed-derived phospholipid product, a safflower seed-derived phospholipid product, a palm seed-derived phospholipid product, and a camellia seed-derived phospholipid product; the animal phospholipid is derived from a terrestrial animal-derived animal phospholipid product, such as a bovine milk-derived phospholipid product and an egg-derived phospholipid product, and an aquatic animal-derived phospholipid product, such as a fish-, shrimp-, and shellfish-derived phospholipid product;
preferably, the vegetable phospholipid product is a sunflower phospholipid product and/or a soybean phospholipid product, and the animal phospholipid product is a bovine milk-derived phospholipid product; more preferably, the animal phospholipid product comprises one or more of a cheese powder, an MFGM and a concentrated bovine milk phospholipid powder; preferably, the water/oil (W/O-type) composition comprises a bovine milk extract, and the content of the bovine milk extract is 1-12%, preferably 2-8% on the basis of the total weight of the water/oil (W/O-type) composition, and/or, the water/oil (W/O-type) composition comprises a vegetable phospholipid product, and the content of the vegetable phospholipid product is 0.1-1.5% on the basis of the total weight of the water/oil (W/O-type) composition.

6. The water/oil (W/O-type) composition of claim 4, **characterized in that**, the water/oil (W/O-type) composition comprises 70-95% of the grease, 0.1-1% of the vegetable phospholipid products, 1-12% of the bovine milk extract, 0.1-5% of the emulsifier and 5-25% or the balance of water, wherein the grease comprises 18-23 wt% of the rice oil, 27-31 wt% of the OPO structured fat, 27-31 wt% of the soybean oil, 17-21 wt% of the coconut oil and 0.5-2 wt% of the algae oil;
preferably, on the basis of the total weight of the grease, in the grease, the content of the rice oil is 21 ± 1 wt%, the content of the OPO structured fat is 29 ± 1 wt%, the content of the soybean oil is 29 ± 1 wt%, the content of the coconut oil is 19 ± 1 wt%, and the content of the algae oil is 1 ± 0.5 wt%.

7. A structured emulsion, **characterized in that**, on the basis of the total weight of the structured emulsion, the structured emulsion comprises 3-10%, preferably 3.7-4.4%, of the grease composition of claim 1 or the water/oil (W/O-type) composition of any one of claims 3-6, 7-17 wt%, preferably 8-11 wt% of a water-soluble component and 72.9%-90% or the balance of water.

8. The structured emulsion of claim 7, **characterized in that**, the water-soluble ingredient comprises a protein, a carbohydrate, a complex microbial mineral and a stabilizer;

preferably, the protein comprises a bovine milk- or goat milk-derived whey protein, casein, a legume-derived protein, and a grain protein, and a partially or fully hydrolyzed protein from a bovine milk- or goat milk-derived whey protein, casein, or a legume-derived protein; preferably, the legume-derived protein is a soybean protein and/or a pea protein; preferably, the grain protein comprises one or more of a rice protein, a rice bran protein, a wheat protein, a rye protein, a sorghum protein, a corn protein, and an oat protein; preferably, the protein in the water-soluble ingredient is provided by a skim milk powder and a whey protein powder; preferably, the content of the protein is 12-18% on the basis of the total weight of the water-soluble ingredient;
preferably, the carbohydrate comprises a digestible carbohydrate and an indigestible carbohydrate; wherein, the digestible carbohydrate comprises at least one of a lactose, a glucose, a galactose, a maltose, a sucrose, a fructose, a starch, a maltodextrin, a glucose syrup, and a corn syrup; the indigestible carbohydrate comprises at least one of a fructooligosaccharide, a galactooligosaccharide, a glucose oligosaccharide, a xylooligosaccharide, a mannan oligosaccharide and a cyclodextrin oligosaccharide; preferably, on the basis of the total weight of the water-soluble ingredient, the total content of the digestible carbohydrate is 60-75%, and the total content of the indigestible carbohydrate is ≤ 10%;
preferably, the multivitamin mineral refers to a composition comprising one or more vitamins and/or one or more minerals; preferably, the vitamin comprises one or more of vitamin A, vitamin D, vitamin E, vitamin K1, vitamin B1, vitamin B2, vitamin B6, vitamin B12, niacin, folic acid, pantothenic acid, vitamin C and biotin; preferably, the mineral comprises at least one of sodium, potassium, copper, magnesium, iron, zinc, manganese, calcium, phosphorus, iodine, chlorine and selenium, optionally comprises choline and/or inositol; preferably, on the basis of the total weight of the water-soluble ingredient, the content of the complex microbial mineral is greater than or equal to 1.5%, preferably 2-6%;

preferably, the stabilizer comprises one or more of a carrageenan, a locust bean gum, a gellan gum, a xanthan gum, a gelatin, an acacia gum, and a soybean polysaccharide; preferably, on the basis of the total weight of the water-soluble ingredient, the content of the stabilizer is 0.1-1%;

preferably, on the basis of the total mass of the water-soluble component, the water-soluble component comprises 12-18% of the protein, 60-75% of the digestible carbohydrate, 2-6% of the multivitamin mineral, 0.1-1% of the stabilizer and ≤ 10% of the indigestible oligosaccharide; preferably, on the basis of the total mass of the water-soluble component, the water-soluble component comprises: 15-25 wt%, preferably 18-23 wt% of the skimmed milk powder, 5-13 wt%, preferably 7-11 wt% of the whey protein powder, 60-70 wt% of the digestible carbohydrate, 2-6% of the multivitamin mineral and 0.1-1% of the stabilizer;

preferably, on the basis of the total mass of the structured emulsion, the structured emulsion comprises 1.5-3 wt% of the skimmed milk powder, 0.5-1.2 wt% of the whey protein powder, 5-7 wt% of the digestible carbohydrate, 0.3-0.5 wt% of the multivitamin mineral, 0.03-0.08 wt% of the stabilizer, 3-5 wt% of the grease composition or the water/oil (W/O-type) composition, and the balance of water.

9. A method for preparing the water/oil (W/O-type) composition of any one of claims 3-6, **characterized in that**, the method comprises:

Step (1): mixing an monoglyceride, a vegetable phospholipid product and a grease and melting same to form an oil phase;
Step (2): mixing an animal phospholipid product with water and dissolving same to form a water phase;
Step (3): mixing the oil phase and the water phase uniformly and then rapidly cooling and kneading same;
preferably, in step (1), the mixture of the monoglyceride, the vegetable phospholipid product and the grease are melted at 50-70°C; in step (2), the mixture of the animal phospholipid product and the water is stirred at room temperature to disperse the animal phospholipid product in the water; in step (3), the mixture of the oil phase and the water phase is stirred at 50-70°C for 10-30 min, and then immediately rapidly cooled and kneaded.

10. A method for preparing the structured emulsion of claim 7 or 8, **characterized in that** the method comprises the following steps:

(1) providing the grease composition of claim 1 or the water/oil (W/O-type) composition of any one of claims 3-6 as an oil phase;
(2) mixing the water-soluble ingredient with water to obtain a water phase composition;
(3) mixing and emulsifying the oil phase and the water phase composition to obtain the emulsion; and optionally
(4) sterilizing the emulsion;
preferably, in the above step (2), the water-soluble ingredient and the water are mixed and stirred below 35°C to form the water phase;
preferably, the emulsification is selected from one or more of a shear emulsification, a colloid mill emulsification, a ball mill emulsification, a ultrasonic emulsification, a membrane emulsification, a microwave emulsification, a sonic emulsification or a self-emulsification; preferably, the shear emulsification is used, the shear rate is 3000-20000 rpm and the shear time is 1-15 min; preferably, homogenization is carried out after the emulsification; preferably, the homogenization has a pressure of 10-500 bar, and performed for more than 3 cycles;
preferably, in the step (3), the grease composition and the water phase composition are mixed at 33-38°C and stirred for less than 20 min, and then sheared and homogenized; preferably, the shear rate is ≤ 4000 rpm, and the shear time is 1-5 min; the homogenization has a pressure of ≤ 20 bars, and can be performed 1-5 times, preferably 3-5 times.

11. A dry powder or a water-reconstituted milk thereof, **characterized in that**, the dry powder is the powder obtained by drying the structured emulsion of claim 7 or 8, preferably an infant formula milk powder; the water-reconstituted milk is an emulsion prepared by dissolving the dry powder with water;

preferably, on the basis of the total mass of the dry powder, the dry powder comprises or consists of the following ingredients: 20-30 wt% of a grease; 0.03-0.5 wt%, preferably 0.03-0.2 wt% of a vegetable phospholipid; 0.05-0.5%, preferably 0.07-0.35% of an animal phospholipid; 10-25 wt% of a protein; 40-55 wt% of a carbohydrate; 0.1-0.8 wt% of a stabilizer; 1-5 wt% of a multivitamin mineral; and 0.1-3.0 wt% of an emulsifier; preferably, the grease comprises or consists of the following ingredients: on the basis of the total mass of the grease, 18-23 wt%, preferably 21 ± 1 wt% of a rice oil, 27-31 wt%, preferably 29 ± 1 wt% of an OPO structured fat, 27-31 wt%, preferably 29 ± 1 wt% of a soybean oil, 17-21 wt%, preferably 19 ± 1 wt% of a coconut oil, and 0.5-2 wt%, preferably 1 ± 0.5 wt% of an algae oil; or preferably, on the basis of the total mass of the dry powder, the dry powder comprises or consists of the following ingredients: 20-30% of a grease; 0.01-0.4%, preferably 0.01-0.2% of a vegetable phospholipid; 0.04-0.5%, preferably 0.05-0.4% of an animal phospholipid; 10-25% of a protein; 40-55% of a carbohydrate; 0.1-0.8% of a stabilizer; 1-5% of a multivitamin mineral; and 0.08-1.5% of an emulsifier; preferably, the grease comprises or consists of the following ingredients: on the basis of the total mass of the grease, 18-23 wt%, preferably 21 ± 1 wt% of a rice oil, 27-31 wt%, preferably 29 ± 1 wt% of an OPO structured fat, 27-31 wt%, preferably 29 ± 1 wt% of a soybean oil, 17-21 wt%, preferably 19 ± 1 wt% of a coconut oil, and 0.5-2 wt%, preferably 1 ± 0.5 wt% of an algae oil;

preferably, the dry powder comprises: 12-17% of a skim milk powder, 5-8% of a whey protein powder, 40-50% of a carbohydrate, 2-4% of a multivitamin mineral, 0.2-0.6% of a stabilizer and 27-32% of the grease composition of claim 1 or the water/oil (W/O-type) composition of any one of claims 3-6.

12. A food composition, **characterized in that**, the food composition comprises the additive composition of claim 2, or comprises the grease composition of claim 1 or the water/oil (W/O-type) composition of any one of claims 3-6, or comprises the structured emulsion of claim 7 or 8, or comprises the dry powder or the water-reconstituted milk thereof of claim 11;

preferably, the food composition is in the form of an emulsion or a powder;
preferably, the food composition is a nutritional fortifier.

13. Use of the grease composition of claim 1, the additive composition of claim 2 or the water/oil (W/O-type) composition of any one of claims 3-6 in improving the digestion of lipids contained in food, or in the preparation of food with improved lipid digestion.

## ..vTERNATIONAL SEARCH REPORT

| | International application No. |
|---|---|
| | **PCT/CN2021/142550** |

### A. CLASSIFICATION OF SUBJECT MATTER

A23L 33/15(2016.01)i

According to International Patent Classification (IPC) or to both national classification and IPC

### B. FIELDS SEARCHED

Minimum documentation searched (classification system followed by classification symbols)

A23L

Documentation searched other than minimum documentation to the extent that such documents are included in the fields searched

Electronic data base consulted during the international search (name of data base and, where practicable, search terms used)

CNTXT, WPABS, VEN, CNKI, 读秀学术, 百度学术: 油脂, 磷脂, 乳化剂, 饱和脂肪酸, 多不饱和脂肪酸, 油酸, 棕榈酸, 亚油酸, 大豆油, 椰子油, 玉米油, 橄榄油, 藻油, 结构脂, 稻米油, 油包水, 婴幼儿, 配方奶, 复原乳, 消化, Oil, phospholipid, emulsifier, saturated fatty acid, polyunsaturated fatty acid, oleic acid, palmitic acid, linoleic acid, soybean oil, coconut oil, corn oil, olive oil, algal oil, structural fat, rice oil, water in oil, infant, formula, reconstituted milk, digestion

### C. DOCUMENTS CONSIDERED TO BE RELEVANT

| Category* | Citation of document, with indication, where appropriate, of the relevant passages | Relevant to claim No. |
|---|---|---|
| X | CN 106029939 A (MJN HOLDINGS LLC) 12 October 2016 (2016-10-12)<br>  claims 1, 7-9, description paragraphs 2-3, 48-49, 59, 121 | 1-13 |
| Y | CN 105744846 A (NESTEC SA.) 06 July 2016 (2016-07-06)<br>  claims 1-14, description paragraphs 100, 118, 128, 140, 171-174 | 1-13 |
| Y | CN 107771035 A (N.V. NUTRICIA) 06 March 2018 (2018-03-06)<br>  description paragraphs 50, 60, 69, 85-98 | 1-13 |
| A | CN 111544392 A (NORTHEAST AGRICULTURAL UNIVERSITY) 18 August 2020 (2020-08-18)<br>  entire document | 1-13 |
| A | CN 106106753 A (HEILONGJIANG FEIHE DAIRY INDUSTRY CO., LTD.) 16 November 2016 (2016-11-16)<br>  entire document | 1-13 |
| A | CN 106359604 A (BEIJING SANYUAN FOODS CO., LTD.) 01 February 2017 (2017-02-01)<br>  entire document | 1-13 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2022** | **08 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/142550**

| Patent document cited in search report | | | Publication date (day/month/year) | Patent family member(s) | | | Publication date (day/month/year) |
|---|---|---|---|---|---|---|---|
| CN | 106029939 | A | 12 October 2016 | US | 2014093614 | A1 | 03 April 2014 |
| | | | | CA | 2929170 | A1 | 11 June 2015 |
| | | | | WO | 2015084532 | A1 | 11 June 2015 |
| | | | | TW | 201531235 | A | 16 August 2015 |
| | | | | AU | 2014357610 | A1 | 12 May 2016 |
| | | | | PH | 12016500690 | A1 | 30 May 2016 |
| | | | | SG | 11201602869 | A1 | 30 May 2016 |
| | | | | AR | 098597 | A1 | 01 June 2016 |
| | | | | IN | 201617012844 | A | 31 August 2016 |
| | | | | MX | 2016007006 | A | 07 September 2016 |
| | | | | EP | 3113631 | A1 | 11 January 2017 |
| | | | | ID | 201709236 | A | 25 August 2017 |
| | | | | AU | 2014357610 | B2 | 12 October 2017 |
| | | | | HK | 1229642 | A0 | 12 November 2017 |
| CN | 105744846 | A | 06 July 2016 | US | 2016295896 | A1 | 13 October 2016 |
| | | | | US | 10440972 | B2 | 15 October 2019 |
| | | | | RU | 2685187 | C2 | 16 April 2019 |
| | | | | AU | 2018206853 | A1 | 09 August 2018 |
| | | | | AU | 2018206853 | B2 | 15 August 2019 |
| | | | | WO | 2015078507 | A1 | 04 June 2015 |
| | | | | MX | 2016006817 | A | 07 September 2016 |
| | | | | PH | 12016500991 | A1 | 04 July 2016 |
| | | | | PH | 12016500991 | B1 | 04 July 2016 |
| | | | | EP | 3082470 | A1 | 26 October 2016 |
| | | | | AU | 2013406461 | A1 | 05 May 2016 |
| CN | 107771035 | A | 06 March 2018 | PL | 3280277 | T3 | 13 December 2021 |
| | | | | EP | 3280277 | A1 | 14 February 2018 |
| | | | | EP | 3280277 | B1 | 30 June 2021 |
| | | | | WO | 2016163881 | A1 | 13 October 2016 |
| CN | 111544392 | A | 18 August 2020 | None | | | |
| CN | 106106753 | A | 16 November 2016 | None | | | |
| CN | 106359604 | A | 01 February 2017 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016163883 A2
- US 20180092376 A1
- US 20170231262 A1

**Non-patent literature cited in the description**

- **MICHALSKI, M. C. ; BRIARD, V ; MICHEL, F. et al.** *Journal of Dairy Science,* 2005, vol. 88, 1927-1940
- **GALLIER, S. ; VOCKING, K. ; POST, J. A et al.** *Colloids Surf B Biointerfaces,* 2015, vol. 136, 329-39
- **LOPEZ C ; MÉNARD O.** *Colloids Surf B,* 2011, vol. 83, 29-41